# FASCICULE DE BREVET EUROPEEN

(11) **EP 3 857 301 B1**
(45) Date de publication et mention de la délivrance du brevet: **19.02.2025**
(21) Numéro de dépôt: 19773133.4
(22) Date de dépôt: 27.09.2019
(51) Int. Cl.: G02F 1/1334, G02F 1/137

(54) **DISPOSITIF ELECTROCOMMANDABLE A DIFFUSION VARIABLE PAR CRISTAUX LIQUIDES ET SON PROCEDE DE FABRICATION**
ELEKTRISCH STEUERBARE VORRICHTUNG MIT VARIABLER STREUUNG DURCH FLÜSSIGKRISTALLE UND HERSTELLUNGSVERFAHREN DAFÜR
ELECTRICALLY CONTROLLABLE DEVICE HAVING VARIABLE DIFFUSION BY LIQUID CRYSTALS, AND MANUFACTURING METHOD FOR THE SAME

(30) Priorité: 27.09.2018 FR 1858901; 24.10.2018 FR 1859816
(43) Date de publication de la demande: 04.08.2021
(73) Titulaire: SAINT-GOBAIN GLASS FRANCE, 92400 Courbevoie (FR)
(72) Inventeur: MONDIOT, Frédéric, 92100 ANTONY (FR)
(74) Mandataire: Saint-Gobain Recherche
(86) Numéro de dépôt international: PCT/EP2019/076247
(87) Numéro de publication internationale: WO 2020/065038

(56) Documents cités:
- US-A- 5 437 811
- US-A- 5 691 795
- US-A1- 2015 029 211
- US-B1- 6 674 504

## Description

L'invention concerne un dispositif électrocommandable à diffusion variable par cristaux liquides, doté entre deux électrodes d'une couche de cristaux liquides, par application d'un champ électrique.

On connait des vitrages dont certaines caractéristiques peuvent être modifiées sous l'effet d'une alimentation électrique appropriée, tout particulièrement la transmission, l'absorption, la réflexion dans certaines longueurs d'ondes du rayonnement électromagnétique, notamment dans le visible et/ou dans l'infrarouge, ou encore la diffusion lumineuse.

Le vitrage électrocommandable à cristaux liquides peut être utilisé partout, tant dans le secteur de la construction que dans le secteur de l'automobile, chaque fois que la vue à travers le vitrage doit être empêchée à des moments donnés.

Les systèmes à cristaux liquides sont connus sous les termes de « PDLC » (Polymer Dispersed Liquid Cristal en anglais) sous forme de gouttelettes de cristaux liquides dispersées dans une matrice polymère ou encore « PSLC » (Polymer stabilized liquid cristal) cristaux liquides répartis de manière homogène.

Le document US5437811 propose un dispositif électrocommandable à base de cristaux liquides.

Un objet de l'invention consiste à développer un dispositif électrocommandable à cristaux liquides de type PSLC avec des propriétés électro-optiques améliorées notamment ajustables à façon.

A cet effet, la présente invention propose d'abord un dispositif électrocommandable à diffusion variable (dispositif plan ou courbe notamment flexible) par cristaux liquides selon la revendication 1 et comportant un empilement de couches (lame d'air comprise éventuellement) dans cet ordre :
- une première électrode de préférence transparente notamment autoportante (film éventuellement flexible) ou de préférence sur un substrat diélectrique de préférence transparent (et éventuellement flexible), en particulier d'épaisseur d'au plus 1cm, 5mm, 3mm ou subcentimétrique ou en particulier film plastique ou verre mince ou ultramince ('UTG' en anglais), film d'épaisseur submillimétrique et même d'au plus 200nm, première électrode comportant (voire constituée de) une première couche électroconductrice (monocouche ou multicouche, en particulier dépôt(s)) notamment minérale en particulier d'au plus 200nm (sur le premier substrat), première électrode avec une première surface principale dite première surface de liaison et une surface dite surface Sb opposée, notamment première électrode comportant un premier moyen d'amenée de courant (bande -bus bar- notamment métallique, en cuivre à l'argent etc) en bordure de la première surface de liaison
- une couche électroactive diélectrique avec une face principale dite face A1 côté surface de liaison et une face principale dite face A2 opposée, la couche électroactive étant d'épaisseur E₀ submillimétrique et même d'au plus 100µm et d'au moins 50nm, notamment de 50nm à 50µm et même de 100nm à 20µm et mieux d'au moins 1µm ou 5µm, couche électroactive en une matière notamment thermotropique (de préférence) et/ou lyotropique contenant (voire constituée de) :
   - des cristaux liquides (notamment thermotropiques et/ou lyotropiques) de préférence majoritaires en poids dans la matière (de préférence au moins 50%, 70%, 80%, 85% en poids desdits cristaux liquides), notamment cristaux liquides comportant de préférence des mésogènes (par exemple sans chaine de polymère) ou au moins des groupements mésogènes incorporés dans une chaine principale ou latérale d'un polymère (famille dite 'LCP' en anglais), en particulier cristaux liquides de taille submillimétrique et même d'au plus 100nm (et inférieure à E₀, par exemple de longueur L avec E₀/L>10 ou 100), en particulier un mélange de plusieurs cristaux liquides (purs, au sens non LCP) (deux ou plus) de préférence dont l'un des cristaux liquides (de préférence majoritaire en poids) présente une autre mésophase P' plus proche de (ou même adjacente à) la phase cristalline (nématique par exemple ou non smectique notamment non smectique A)
   - des polymères formant un réseau (tridimensionnel) polymérique, les cristaux liquides étant stabilisés (physiquement) par le réseau polymérique -(c'est-à-dire de la famille PSLC en anglais ou CLSPS en français), de préférence avec au plus 20%, 15%, 10%, 5% en poids de polymère (ou polymères et précurseurs de polymères),
   - éventuellement des précurseurs de(sdits) polymères ou encore des polymères non réticulés
   - de préférence des espaceurs notamment de hauteur (et même de plus grande dimension) inférieure ou égale à E0, en périphérie (diélectrique, transparents ou non éventuellement masqués par un cadre, par exemple en mylar etc) et/ou dispersés dans la couche électroactive (diélectriques, transparents, notamment plastique, verre, silice de préférence subcentimétriques, notamment des billes)
   - éventuellement des additifs, comme des particules et de préférence des particules non chargées (sans anions, cations), de préférence de hauteur inférieure ou égale à E₀ (et même de plus grande dimension inférieure ou égale à E₀)
   - une deuxième électrode de préférence transparente notamment autoportante (film éventuellement flexible) ou de préférence sur un support diélectrique de préférence transparent, en particulier d'épaisseur d'au plus 1cm, 5mm, 3mm ou subcentimétrique en particulier film plastique ou en verre mince ou ultramince (UTG en anglais), film d'épaisseur submillimétrique et même d'au plus 200nm, notamment deuxième électrode comportant (voire constituée de) une deuxième couche électroconductrice (monocouche ou multicouche en particulier dépôt(s)) notamment minérale en particulier d'au plus 200nm (sur le support), deuxième électrode avec côté face A2 une surface principale dite deuxième surface de liaison et avec une surface Sc opposée en en particulier deuxième électrode comportant un deuxième moyen d'amenée de courant (bande notamment métallique, bus bar) en bordure de la deuxième surface de liaison et mieux à l'opposé du premier moyen d'amenée de courant.

A l'état transparent, la couche électroactive est visible par transparence côté première électrode et/ou côté deuxième électrode, de préférence des deux côtés. De préférence la couche électroactive est scellée en périphérie par un joint diélectrique notamment polymérique (en bordure des première et deuxièmes surfaces de liaisons, en contact avec la matière à base de cristaux ou séparé par un espaceur périphérique).

En outre la matière présente une mésophase dite P, à partir d'une température dite T1 (et en dessous d'une température dite Tf qui peut être la température de transition en phase isotrope) de préférence T1 d'au plus 120°C, 90°C, 50°C, 40°C et mieux d'au moins 10°C, 20°C, et mieux dans une gamme de température d'au moins 5°C, 10°C, dans laquelle en particulier la matière comporte (en volume, dans l'épaisseur le plus souvent), un ensemble de domaines (contenant les cristaux liquides stabilisés par le réseau polymérique), et même est essentiellement divisée en lesdits domaines ou éléments de volumes,- les domaines s'étendant de préférence entre les première et deuxième électrodes au moins sur une fraction de l'épaisseur E₀, et les domaines comportant des défauts topologiques bidimensionnels en particulier des défauts lignes notamment au moins deux formes de défauts lignes (par exemple l'un elliptique -cercle inclus- l'autre ligne droite ou courbe , hyperbole etc).

A une température T' supérieure ou égale à T1, la matière étant dans la mésophase P, l'empilement (ou le dispositif -grâce à l'empilement-) présente au moins trois états (stables) de diffusion commutables (commutables entre eux, ainsi un des trois états commutable vers un autre des trois états et de façon réversible) pour au moins une longueur d'onde de la gamme du visible (par exemple à une valeur entre 380 et 780nm ou 800nm notamment 550nm , et même de 380 à 780nm ou 800nm) voire même pour au moins une longueur d'onde de la gamme de l'infrarouge proche (par exemple à une valeur entre 800nm et 2,5µm même de 800nm à 2,5µm.

Le premier état est le plus diffusant notamment défini par un flou H0 non nul ou une transmission diffuse TD0 non nulle.

Le deuxième état est moins diffusant que le premier état et est de préférence défini par un flou H1 inférieur à H0 (ou une transmission diffuse TD1 inférieure à TD0) et non nul.

Et le troisième état étant transparent ou moins diffusant que le deuxième état est notamment défini par un flou H2 inférieur à H1 ou une transmission diffuse TD2 inférieure à TD1).

Au moins deux des trois états sont obtenus par l'application d'un champ électrique (alternatif ou continu, de préférence normal à la face A1) entre les première et deuxième électrodes.

La commutation est réversible. Les trois états sont réversibles et même stables.

Jusqu'ici il n'était possible d'obtenir avec une couche de PSLC en phase nématique que deux états stables et réversibles :
- l'un diffusant (à l'état off)
- et l'autre état transparent par un alignement des cristaux liquides parallèle au champ électrique appliqué (l'état on), à partir d'une valeur seuil nécessaire pour vaincre la force de rappel des cristaux liquides.

Par ailleurs, dans les dispositifs classiquement fabriqués lorsque l'on applique un champ électrique en mésophase smectique, il n'y a pas de commutations réversibles.

Selon l'invention, le réseau polymérique ainsi que la formation des domaines avec des défauts bidimensionnels permet notamment aux cristaux liquides de s'orienter et de se stabiliser aussi dans une multitude de positions intermédiaires entre l'état le plus diffusant et l'état le plus transparent et également d'induire un changement brutal de direction (de type« interrupteur de lumière »).

Selon les applications on peut utiliser l'invention entre un état transparent et plusieurs états diffusants ou même entre deux ou plus états diffusants.

Une explication microscopique est qu'à partir de T1, en présence de la mésophase P, au moins une fraction des cristaux liquides sont mobiles et aptes à s'orienter suivant trois positions générant les trois états stables, le passage d'un état à l'autre étant réversible. Plus largement, au moins une fraction des cristaux liquides sont mobiles et aptes à s'orienter suivant une multitude de positions générant une multitude d'états stables le passage d'un état à l'autre étant réversible.

Dans le présent texte, P ou P' sont des mésophases qui par définition se distinguent d'une phase cristalline ou d'une phase isotrope. Appliqué à P ou P', le terme phase veut dire plus précisément mésophase.

Les résultats sont similaires que le champ électrique (normal à la face A1) soit alternatif ou continu sur la plage de tension 0-120V et la plage de fréquence 50Hz-1 kHz.

Les changements d'orientations sont induits de préférence par application d'un champ électrique normal à la face A1 (au plan moyen si l'empilement est courbe par exemple flexible et entre des substrats bombés notamment de verre).

De préférence le temps de relaxation d'un état à l'autre est d'au plus 1s ou moins.

On peut en particulier passer d'un état diffusant à l'état transparent (dans tout ou partie du visible) en passant de 0V à tout valeur non nulle notamment jusqu'à 220V ou 120V et même d'au plus 100 ou 80V.

Le niveau de diffusion peut être piloté, notamment ajusté en fonction de données récoltées par des capteurs (température, luminosité etc) en communication avec le dispositif (commandant la source d'alimentation électrique).

On peut aussi concevoir un miroir commutable avec une variation de flou (première ou deuxième couche réfléchissante ou encore ajout d'une couche miroir ou d'un miroir additionnel).

On peut teinter à façon un ou plusieurs des éléments du dispositif (électrode, couche d'ancrage, substrat ou support, intercalaire de feuilletage, contre verre ..).

L'invention s'appuie de préférence d'abord sur l'existence de défauts topologiques qui sont 2D.

Avantageusement, le premier état (le plus diffusant) est accessible en l'absence dudit champ électrique appliqué (normal à la face A1), les deuxième et troisième états sont accessibles en présence dudit champ électrique appliqué, le deuxième état étant obtenu pour une tension V1 et le troisième état étant obtenu pour une tension V2 supérieure à V1 notamment avec au moins un écart entre V2 et V1 de 5V, 10V, 20V. Par exemple V1 est entre 5V et 30V et V2 entre 30V et 120V.

Plus largement, on peut faire le flou (dans le visible) dès que l'on fait varier l'amplitude du champ / la tension V.

Chaque flou étant par exemple défini comme le rapport de la transmission diffuse TD sur la transmission totale TT. On préfère l'exprimer en %.

Ainsi, l'empilement (et même le dispositif) présente un flou (et/ou une transmission diffuse) qui varie avec la tension dans toute ou partie d'une plage entre 5V et 120V ou 220V (par exemple entre 10V et 50V) et même à partir de 0,1V ou 1Vau moins à une longueur de référence telle que 550nm ou entre 500nm et 600nm ou même sur la plage de longueur d'onde dans le visible 400-800nm avec de préférence (notamment avec une épaisseur E0 de couche électroactive d'au plus 12µm) :
- H2/H1 (et/ou TD2/TD1) d'au plus 99% et même 94% à une longueur de référence telle que 550nm ou même sur la plage de longueur d'ondes 400-800nm pour V1 à 10V et V2 à 40V et en mode continu
- H2/H1 (et/ou TD2/TD1) d'au plus 98% (et même au plus 90% ou 80% ou 67%) à une longueur de référence telle que 550nm ou même sur la plage de longueur d'ondes 400-800nm pour V1 à 20 V et V2 à 70V et en mode continu
- H2/H1 (et/ou TD2/TD1) d'au plus 97% (et même au plus 70% ou 47%) à une longueur de référence telle que 550nm ou même sur la plage de longueur d'ondes 500 et 700nm ou même 400-800nm pour V1 à 20 V et V2 à 100V et en mode continu
- H1/H0 (et/ou TD2/TD1) d'au plus 99% (et même au plus 98%) à une longueur de référence telle que 550nm ou même sur la plage de longueur d'ondes 500 et 700nm ou même 400-800nm pour V1 à 10V
- H1/H0 d'au plus 98% (et même 97%) à 550nm ou même sur la plage de longueur d'ondes 500 et 700nm ou même 400-800nm pour V1 à 20V.

En particulier dans le cas de domaines (de type) non TFCD
- H2/H1 (et/ou TD2/TD1) d'au plus 99% (et même au plus 75% ou 69%) à une longueur de référence telle que 550nm ou même sur la plage de longueur d'ondes 500 et 700nm ou même 400-800nm pour V1 à 10V et V2 à 40V et en mode continu
- H2/H1 (et/ou TD2/TD1) d'au plus 98% (et même au plus 60% ou 59%) à une longueur de référence telle que 550nm ou même sur la plage de longueur d'ondes 500 et 700nm ou même 400-800nm pour V1 à 20 V et V2 à 70V et en mode continu
- H2/H1 (et/ou TD2/TD1) d'au plus 97% (et même au plus 55% ou 46%) à une longueur de référence telle que 550nm ou même sur la plage de longueur d'ondes 500 et 700nm ou même 400-800nm pour V1 à 20 V et V2 à 100V et en mode continu
- H1/H0 (et/ou TD1/TD0) d'au plus 99% (et même au plus 92%) à une longueur de référence telle que 550 nm ou même sur la plage de longueur d'ondes 500 et 700nm ou même 400-800nm pour V1 de 10V
- H1/H0 (et/ou TD1/TD0) d'au plus 98% (et même au plus 90% ou 80%) pour V1 à 20V.

Le flou H0, H1 ou H2 (et toute autre valeur de flou) est de préférence défini comme le rapport de la transmission diffuse TD sur la transmission totale TT (à la température T').

A T', le flou peut être mesuré en plaquant le dispositif selon l'invention contre une fenêtre d'entrée circulaire et de rayon égal à 10mm, d'une sphère intégrante de diamètre égale à 150mm et revêtue en interne d'un matériau dénommé spectralon qui est polymère fluoré type PTFE fabriqué par Labsphere. Par exemple on choisit T' = T1 + au moins 5°C.

La sphère intégrante comporte une fenêtre de sortie en spectralon diamétralement opposée à la fenêtre d'entrée, circulaire et de rayon égal à 10mm.

La transmission totale est quant à elle mesurée avec la fenêtre de sortie de la sphère intégrante.

La transmission diffuse est quant à elle mesurée en enlevant la fenêtre de sortie de la sphère intégrante.

Chaque longueur d'onde est envoyée avec une intensité I0 sur le dispositif (faisceau normal au dispositif) devant ladite sphère intégrante.

A T', on peut mesurer la transmission totale ou la transmission diffuse lorsque le champ électrique est appliquée (avec une tension qui peut varier avec un pas de 10V par exemple).

Le signal reçu (I_TT ou I_TD) est alors comparé avec I0 pour en déduire les transmissions.

La valeur du flou (de TD) peut varier en fonction de la taille ou du type de défauts bidimensionnels, de leur densité, de l'épaisseur de la matière électroactive, du choix des cristaux liquides, du réseau de polymère (taux de réticulation, condition de polymérisation).

On peut mesurer de la même manière dans l'infrarouge.

La transmission totale TT peut être quant à elle assez constante (indépendante du champ électrique appliqué) notamment d'au moins 70% dans le visible lorsque les première et deuxième électrodes sont transparentes ainsi leurs substrat et support éventuels (ainsi que les couches d'ancrage), en particulier substrat et support non teintés.

En particulier l'empilement (et même le dispositif) présente une transmission totale TT (mesurée comme définie précédemment) :
- d'au moins 5%, 10% ou encore d'au moins 70% et même d'au moins 75% à 550nm et même de 500 à 600nm ou à 780nm,
- et/ou avec un écart entre la transmission totale maximale TTmax et la transmission totale minimale TTmin d'au plus 5% de 500 à 600nm et même de 500 à 780nm.

Et la transmission totale TT' sous ledit champ électrique (quelle que soit la tension V notamment V entre 5V et 120V) peut être telle que TT'-TT est inférieure à 2% à 550nm et même de 500 à 600nm ou 780nm et même un écart entre la transmission totale maximale sous champ TT'max et la transmission totale minimale TT'min (sous champ électrique) d'au plus 5% de 500 à 600nm et même 780nm notamment sur une plage de tension électrique entre 10V et 50 V et même 5 et 120V.

De même l'empilement (et même le dispositif) présente une transmission totale TT (sans champ électrique) (mesurée comme définie précédemment) :
- d'au moins 5%, 10% ou encore d'au moins 70% et même d'au moins 75% à 550nm et/ou même dans le proche infrarouge de 800nm à 1200nm ou à 1500nm,
- et/ou avec un écart entre la transmission totale maximale TTmax et la transmission totale minimale TTmin d'au plus 5% de 800nm à 1200 nm ou à 1500nm.

Et la transmission totale TT' sous ledit champ électrique (quel que soit la tension V) peut être telle que TT'-TT est inférieure à 2% à 900nm et même de 800 à 1500 nm et même un écart entre la transmission totale maximale sous champ TT'max et la transmission totale minimale (sous champ) TT'min est d'au plus 5% de 800nm à 1200nm ou à 1500nm.

A T', la matière peut présenter plusieurs phases P en particulier nématiques (par exemple nématique non torsadée et nématique torsadée), chacune avec des défauts de la phase P' (de préférence smectique notamment A).

On peut préférer que la matière présente une seule mésophase P' en particulier smectique notamment A à une température inférieure à T'.

La phase P par exemple nématique ou non smectique, notamment non smectique A, peut ne pas générer intrinsèquement les défauts bidimensionnels (de la mésophase P').

Ces défauts sont alors produits dans une mésophase P' plus proche de celle du cristal telle que la phase smectique, figé par un réseau polymérique, et conservée (plus ou moins parfaitement) dans la phase P.

Selon l'invention telle que revendiquée, lesdits domaines de la mésophase P sont des domaines subsistant d'une autre mésophase P' et notamment la phase P est nématique, la phase P' est smectique et lesdits défauts de la mésophase P' sont des défauts smectiques.

On peut dire notamment que le réseau polymérique conserve (est l'empreinte de) l'organisation et l'orientation des cristaux liquides en phase P' (par exemple smectique), et donc oriente les cristaux liquides à son tour en phase P (par exemple nématique) pour former les domaines avec les défauts (par exemple nématiques).

Aussi la couche électroactive peut posséder de préférence toujours au moins deux mésophases P et P'. On peut déterminer la transition P à P' par analyse enthalpique différentielle ou MOP.

L'ordre moléculaire diffère d'une mésophase à une autre. Les mésophases diffèrent par le type et le degré d'auto-organisation des molécules, Le comportement directionnel collectif dépend de la nature et la structure des mésogènes.

En particulier, la matière peut présenter une autre mésophase P', la mésophase P est plus éloignée de la phase cristalline que la mésophase P' (éventuellement adjacente donc qui est la première mésophase), en particulier la mésophase P est nématique.

La mésophase P de préférence présente un ordre de position en moins qu'une mésophase P' de la matière, en particulier les cristaux liquides sont en moyenne parallèles entre eux c'est-à-dire avec au moins ordre d'orientation spontanée à longue portée.

La mésophase P peut présenter (adopter) une structure notamment imposée par le réseau polymérique, sensiblement (assimilable à) des couches de cristaux liquides avec des zones de couches de cristaux liquides courbes et éventuellement des zones de couches de cristaux liquides planes.

La mésophase P peut être la moins proche de celle du cristal, notamment avec un ordre solide en moins, avec un degré de liberté en moins d'une mésophase plus proche du cristal.

La mésophase P peut être la plus proche de celle du liquide isotrope.

Et de préférence la matière comprend une mésophase P' jusqu'à une température T'1 inférieure ou égale à T1, le changement de la mésophase P' à la mésophase P étant réversible, directe ou indirecte.

Les défauts bidimensionnels peuvent être formés par des contraintes imposées en phase P' par l'usage de couches d'ancrage ou encore par application d'un champ électrique basse fréquence.

Une façon de générer les défauts est de faire varier l'épaisseur E0 au moment de la fabrication en phase P'.

Dans ladite mésophase P, les domaines peuvent être avoir une large distribution de taille submétrique (notamment moins de 10cm), même subcentimétrique et même submillimétrique, en particulier micronique de 1 à 200µm voire submicronique et mieux d'au moins 50nm.

On peut caractériser la mésophase P en particulier par microscopie en lumière polarisée dite MOP.

Avantageusement, à T', sans le dit champ électrique et/ou sous ledit champ électrique, les domaines sont caractérisés par microscopie optique en lumière polarisée dite MOP (à un grossissement d'au moins x20 par exemple), sur l'image dudit MOP chaque domaine étant défini par une surface dite surface apparente SD qui peut avoir un diamètre équivalent submétrique (notamment moins de 10cm), même subcentimétrique et même submillimétrique, en particulier micronique de 1-200µm voire submicronique et mieux d'au moins 50nm.

La surface apparente SD peut inclure ou correspondre à la projection verticale d'un défaut ligne fermé formant la base du domaine.

Cette surface apparente SD peut être :
- irrégulière proche d'une ellipse, d'un cercle, d'un rectangle ou carré
- régulière comme une ellipse, d'un cercle, d'un rectangle ou carré.
La densité de domaines peut être d'au moins de 100 domaines/mm² ou même d'au moins 1000 domaines/mm² en particulier déterminé par le nombre de surfaces apparentes SD.

Par exemple sur l'image, on définit un rectangle de dimensions prédéfinies et on compte le nombre le nombre de surface apparentes SD.

L'arrangement de domaines peut être régulier (périodique ou pseudo période) c'est-à-dire avec une répétition des domaines.

L'arrangement de domaines et/ou à l'intérieur des domaines peut être aléatoire et dépend essentiellement de sa méthode de fabrication.

Il peut y avoir plusieurs tailles de surface apparentes SD par exemple au moins deux, ou trois.

Les domaines peuvent un taux d'occupation d'au moins 2%, 10% 50%, 70% notamment mesuré par traitement d'images en microscopie optique polarisante (ladite MOP) par le taux d'occupation des surfaces apparentes SD.

En particulier on peut définir un domaine de surface SD sous champ électrique continu par exemple à 25V.

Sur une image MOP, un domaine avec des défauts lignes peut avoir une forme multilobaire (avec un contraste de luminosité).

Sur une image MOP, un domaine avec des défauts de type non TFCD peuvent être avec quatre lobes analogues à un trèfle à quatre feuilles.

Sur une image MOP, un domaine avec des défauts de type non TFCD peuvent être avec deux lobes et la texture ressembler une maille d'un tricot jersey.

La largeur ou diamètre équivalent de la surface apparente SD peut être notamment submillimétrique et notamment entre 1 et 200µm.

Sur une image MOP, chaque domaine de surface apparente SD peut être délimitée avec une ligne fermée noire (ou moins plus sombre) de largeur Ln qui est notamment d'au plus 5µm et/ou même d'au plus LD/10 ou LD/20.

Par ailleurs, la couche électroactive peut être dénuée des particules chargées (ions, cations) avec un écoulement sous ledit champ électrique.

Il est connu qu'une couche de cristaux liquides peut être organisée en colonnes avec des cristaux liquides discotiques notamment. Parmi les structures colonnaires on connait la texture « sphérique » ou mosaïque et leurs combinaisons.

Dans la mésophase P, la couche électroactive peut être structurée, en colonnes des cristaux liquides.

Il est connu qu'une couche de cristaux liquides en mésophase smectique peut être organisée en couches (avec des cristaux liquides calamitiques ou discotiques notamment) contrairement à une mésophase nématique classique de l'art antérieur. Ces couches sont d'épaisseur de l'ordre du nm.

Toutefois, contraintes dans un volume, ces couches peuvent ne pas être planes en tout point et dès lors s'inclinent fortement et à très grande échelle (par rapport aux molécules de cristaux liquides). Ces couches sont par exemple d'épaisseur Ec de l'ordre de nm.

Parmi les structures à couches on connait les textures à domaines focaux dans les smectiques.

Par analogie, dans la mésophase P, la couche électroactive peut être structurée, en couches des cristaux liquides d'épaisseur Ec de l'ordre de nm (par exemple au plus 100nm) et de manière inédite il peut s'agir d'une phase qui n'est pas smectique.

Les domaines peuvent être assimilables (de type) à des domaines coniques focaux (dits FCD en anglais) des phases smectiques (A) en particulier toriques (TFCD), non toriques (non TFCD°, paraboliques, hémicylindriques (notamment oily streaks en anglais) , en éventail (fan shaped FCD).

Par exemple sans champ électrique les domaines de type TFCD comportent :
- dans une zone centrale, des couches planes et parallèles entre elles et aux électrodes avec les cristaux liquides orientés à la normal.
- et dans les zones de limites, inclinées (en gardant l'épaisseur Ec).

Les défauts engendrent ces zones de fortes courbures.

Les cristaux liquides ont tendance à l'état off diffusant à être avec une orientation normale aux couches (et aux électrodes) dans les zones de couches planes, et dans les zones de couches courbes (sans variation d'épaisseur Ec) à être tangent aux couches.

Les défauts bidimensionnels sont par exemple des défauts lignes choisis parmi un contour fermé régulier ou irrégulier, comme un cercle régulier ou irrégulier, une ellipse régulière ou irrégulière, un carré ou rectangle et/ou une géométrie linéaire, elliptique, parabolique, hyperbolique et en particulier la couche comporte un premier type de défauts fermés et un deuxième type de défauts.

Comme exemple de domaines coniques focaux on peut citer ceux décrits dans la publication intitulée periodic of frustrated docal conic defect in smectic liquid crystal films, B Zappone et autres, Soft Matter 2012, 8, pp4318-4326 ainsi que les publications citées dans cette référence.

De préférence, on utilise des couches d'ancrage qui servent à l'ancrage des cristaux liquides par interactions de surface pendant la fabrication, en l'absence de champ appliqué.

A la surface avec les couches d'ancrage les cristaux peuvent demeurent accrochées à celle-ci jusqu'à un certain niveau de champ (tension).

Pour la formation des domaines comportant des défauts, l'empilement de couches peut ainsi comporter en outre :
- en contact la face A1, une première couche d'ancrage de surface des cristaux liquides, apte à ancrer au moins une fraction des cristaux liquides (dans les domaines) en contact de cette première couche d'ancrage selon une première orientation de préférence planaire en l'absence dudit champ électrique appliqué, première couche d'ancrage de préférence transparente (éventuellement teintée) notamment d'épaisseur E₁ d'au plus micrométrique et même submicrométrique
- en contact la face A2 une deuxième couche d'ancrage de surface, notamment normal ou planaire dégénéré, apte à orienter une fraction des cristaux liquides en contact de cette deuxième couche d'ancrage selon une deuxième orientation similaire ou distincte de la première orientation en l'absence dudit champ électrique appliqué, deuxième couche d'ancrage de préférence transparente (éventuellement teintée) d'épaisseur E'₁ d'au plus micrométrique et même submicrométrique.

Les couches d'ancrage notamment antagonistes servent à générer des défauts topologiques 2D qui contribuent aux propriétés électrooptiques précitées. Il peut même y en avoir plus de deux couches d'ancrage (trois ou plus), alors il y a plusieurs couches de cristaux liquides espacés par des couches d'ancrages.

Il peut aussi y avoir sur une même surface plusieurs zones d'ancrages distinctes Ces défauts sont générés par des déformations mécaniques de la structure de la matière et sont obtenus par les contraintes imposées par les deux couches d'ancrage forçant les cristaux liquides en contact avec ces couches à des orientations spécifiques et distinctes.

L'une des couches peut être à la limite une lame d'air (fonction d'ancrage normal) de préférence épaisseur constante pour éviter l'iridescence, entre la deuxième électrode et la face A1. La Lame d'air peut être obenu par des espaceurs pérphériques et/ou émergeant de la couche électroactive (transparents, notamment plastique, verre, notamment billes) notamment de hauteur (et même de plus grande dimension).

La première couche d'ancrage peut être un ancrage planaire et la deuxième couche d'ancrage est un ancrage normal ou la première couche d'ancrage peut être un ancrage planaire dégénéré et la deuxième couche d'ancrage est un ancrage planaire dégénéré.

L'ancrage planaire peut être :
- sans direction privilégiée (dit dégénéré)
- ou unidirectionnelle fixant orientation zénithal et azimutal du directeur n du cristal liquide), par exemple par texturation, brossage de la couche d'ancrage planaire (rubbing en anglais), par exempl comportant nano ou microsillons
- ou même suivant plusieurs directions croisées (à 90° etc) par texturation, brossage de la couche d'ancrage planaire.

On peut utiliser un tissu en velours pour le brossage.

La première couche d'ancrage, notamment hydrophile, est par exemple :
- diélectrique (notamment amorphe, polymérique et/ou minérale, un verre), avec une fonctionnalisation de la surface Sb , en particulier, une couche à base de polyalcool vinylique (PVA) de polyimide par exemple pour un ancrage planaire
- ou semiconductrice comme le disulfure de molybdène, ou sulfure de molybdène(IV),
- électroconductrice notamment qui est une fraction d'épaisseur de la première électrode.

Pour un ancrage planaire unidirectionnel, on peut utiliser un film de fluoropolymère tel que le polytétrafluoroéthylène PTFE ou téflon (avec les chaines de polymères alignées selon la direction de déplacement de la barre de téflon lors du dépôt).

La deuxième couche d'ancrage est par exemple :
- diélectrique (notamment amorphe, polymérique et/ou minérale, un verre), avec une fonctionnalisation de la surface Sc (silanisation pour un ancrage normal), en particulier, une couche de polyalcool vinylique (PVOH) de polyimide pour un ancrage planaire
- ou semiconductrice
- ou électroconductrice notamment qui est une fraction d'épaisseur de la deuxième électrode
- une lame de gaz, d'air (si on veut un ancrage normal).

L'une des couches d'ancrage peut être un polymère amorphe (poly(méthacrylate de méthyle PMMA, polycarbonate, polystyrène) avec une texturation ou brossage éventuel et l'autre des couches d'ancrage en polymère cristallin (PET, nylon, poly(téréphtalate de butylène) PBT, PVA) avec une texturation ou brossage éventuel Pour un ancrage normal, les couches les plus couramment utilisées sont à base l' octyltrichlorosilane (OTS) et chlorure de N,N-diméthyl-N-octadécyl-3-aminopropyltriméthoxysilane (DMOAP).

Une couche à base dodécylsulfate de sodium (SDS) ou encore des mélanges d'alcanethiols peuvent aussi générer un ancrage normal.

L'une ou les première et deuxième couches d'ancrage sont par exemple déposées par voie liquide respectivement sur les premières et deuxièmes électrodes (autoportantes ou dépôts).

La première couche d'ancrage peut être un film de préférence mince (flexible..) par exemple d'au plus 200µm ou 50µm qui est notamment
- porteur de la première électrode (elle-même de surface libre par exemple face extérieure ou dans un espace interne d'un vitrage multiple ou encore en contact avec un film fonctionnel notamment flexible, polymérique (antirayures, avec revêtement fonctionnel par exemple de contrôle solaire , basse émissivité ou alimentation d'un dispositif (opto)électronique) etc) ou un intercalaire de feuilletage comme EVA ou PVB détaillé plus tard (contact adhésif)
- ou lié à la première électrode par une colle optique elle-même sur un support comme un film fonctionnel notamment flexible et/ou polymérique (antirayures, avec revêtement fonctionnel à l'opposé par exemple de contrôle solaire, basse émissivité ou alimentation d'un dispositif (opto)électronique) etc) et lui-même éventuellement lié (en **contact adhésif** avec à un intercalaire de feuilletage comme EVA ou PVB (détaillé plus tard).

Et/ la deuxième couche d'ancrage peut être un film de préférence mince (flexible...) par exemple d'au plus 200µm ou 50µm qui est notamment :
- porteur de la deuxième électrode (elle-même de surface libre par exemple face extérieure ou dans un espace interne d'un vitrage multiple ou encore en contact avec un film fonctionnel notamment flexible et/ou polymérique (antirayures, avec revêtement fonctionnel par exemple de contrôle solaire, basse émissivité ou alimentation d'un dispositif (opto)électronique) etc) et lui-même éventuellement lié (en contact adhésif avec à un intercalaire de feuilletage comme EVA ou PVB (détaillé plus tard).
- ou lié à la deuxième électrode par une colle optique (elle même sur un support comme un film fonctionnel notamment flexible et/ou polymérique (antirayures, avec revêtement fonctionnel à l'opposé par exemple de contrôle solaire, basse émissivité ou alimentation d'un dispositif (opto)électronique) etc) et lui même éventuellement lié (en contact adhésif avec à un intercalaire de feuilletage comme EVA ou PVB (détaillé plus tard).

Les mésophases thermotropes sont classifiées selon leur degré d'ordre et suivant la morphologie et la structure chimique des mésogènes.

Dans une réalisation préférée, la phase P est nématique éventuellement torsadée et appelée cholesterique et la phase P' est smectique.

Comme mésophase P nématique on connait aussi une phase nématique biaxe (avec ordre orientationnel dans deux directions), ou encore une phase nématique en « torsion-flexion » (nematic twist-bend phase en anglais).

Dans les smectiques on connait :
- smectique A SmA (de préférence),
- smectique B SmB,
- smectique C SmC,
- smectique I SmI,
- et smectique F,
- smectiques torsadées ou chirales qui possèdent un centre d'asymétrie avec la notation * comme SmC*
- et les phases : E, G, H, J, K, qui sont de type smectiques.

La transition entre la phase smectique (torsadée ou non) et la phase nématique peut être directe on directe en augmentant progressivement la température.

Strictement parlant, les phases J G E K et h sont de type smectique (« soft » crystals) On peut citer le Goodbye Handbook Visual Display Technology 2012 comme manuel de référence.

La plupart des phases smectiques ne transitent jamais directement vers la phase nématique. Par ailleurs, selon le composé chimique, en augmentant progressivement la température, une phase smectique C peut transiter vers une phase smectique A puis une phase nématique ou directement vers une phase nématique sans passer par la phase smectique A

Entre la phase A (smectique) et la nématique il peut exister une ou plusieurs smectiques intermédiaires. Par exemple certains composés peuvent avoir cette séquence : G, J, Sml, SmC, SmA, N.

Les discoïdes peuvent former des phases « nématiques discotiques » ou « cholestériques discotiques » mais elles peuvent aussi s'empiler pour former des phases colonnaires de géométrie variable : verticale, oblique, etc (colH, ColR ColOBI). Les colonnes sont fluides en ce sens que les distances entre deux molécules d'une même colonne fluctuent plus ou moins fortement et qu'il n'y a pas d'ordre à grande distance. D'autre part il n'existe aucune corrélation de position entre les molécules appartenant à deux colonnes voisinLe polymorphisme très riche des phases smectiques démultiplie les types de textures possibles.

Les cristaux liquides peuvent être de diverses formes :
- calamitique : forme allongée cylindrique (géométrie anisotrope) on définit une longueur L1 et une largeur W1 avec L1/W1
- et/ou discotique : disque à corps aromatique(s) (plusieurs cycles aromatiques adjacents) D, empilement colonnaire ou structure à couche (phase smectique)
- coeur courbe en forme de banane par exemple avec un mésophase B7.

Les cristaux liquides peuvent être des molécules avec une structure anisométrique comportant des terminaisons alkyles ou alkoxy. (CH2)x.

D préférence les cristaux liquides possèdent une partie rigide, le coeur aromatique (cas des cristaux liquides thermotropes), et une ou plusieurs parties flexibles, généralement des chaînes aliphatiques. La partie centrale est le plus souvent rigide pour la formation de mésophases. Les extrémités sont flexibles.

Pour les cristaux liquides lyotropes la partie rigide est substituée par un ion, c'est le cas par exemple des phospholipides, sur lequel sont greffées une ou plusieurs chaînes alkyl. Ça peut être des micelles anisotropes, en forme de ballons de rugby ou de disque.

À cette anisotropie géométrique peut s'ajouter une anisotropie chimique si les parties rigide et flexible sont respectivement polaire et apolaire, la molécule est dite alors amphiphile ou amphipathique.

La structure chimique peut être la suivante : 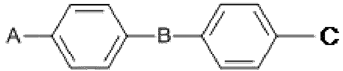 avec
A : groupe orienteur (cyano, nitro, méthyle, halogène, etc.)
B : groupe pontant (souvent linéaire) (alcène, ester, etc.)
C : alcane polyéthers CₙH₂ₙ₊₁ ou perfluorés CₙF₂ₙ₊₁ (A=C parfois)

On peut se référer aussi aux cristaux liquides cités dans le brevet GB0823013. Les cristaux liquides métallotropes sont eux les cristaux liquides possédant un ou plusieurs atomes métalliques dans leur structure moléculaire. La molécule s'appelle alors « métallogène ».

On préfère les cristaux liquides avec les mésophases smectiques A et nématique. Comme familles de cristaux liquides on peut citer
- les cyanobiphényles, par exemple le 8CB qui est 4-octyl-4'-cyanobiphényle seul ou en mélange avec le et le 4-cyano-4'-pentylbiphényle (5CB)
- un mesogène contenant du silicium, un mesogène avec du siloxane, un organosiloxanes,
- un benzoate

On peut utiliser les cristaux liquides cités dans le brevet WO2010/070606.

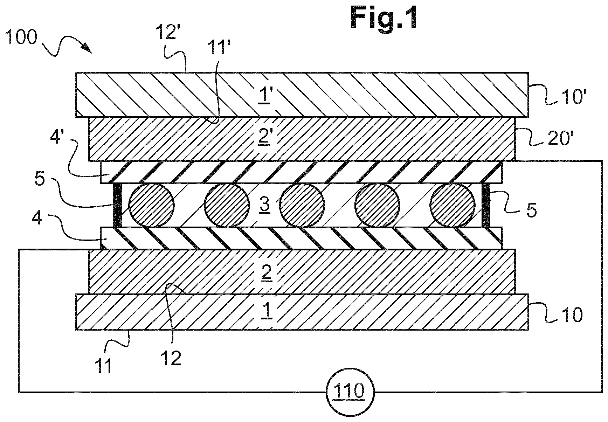

On peut également utiliser les CL (seuls ou en mélange avec d'autres) cités dans la publication Goodby et al., Liquid Crystals, June 2015 intitulée what makes a liquid crystal ? The effect of free volume on soft matter :
- sexiphényle (figure 1),
- quinquéphényle,2', 3ʺʺ-diméthylsexiphényle,undécyloxy et dodécyloxycyanobiphényle (figure 1)
- ceux du tableau 3 en particulier les 3 premiers
- ceux du tableau Tableau 5
- les NTB ('Twist bend nematique').

On peut faire des mélanges de cristaux liquides pour abaisser la température T1 de transition entre phases P et P' par exemple entre smectique (A) et nématique. Par exemple un mélange 8CB et 5CB qui n'a pas de phase smectique pour abaisser T1

Les polymères sont par exemple obtenus à partir des précurseurs de polymères suivants
- les diacrylates, diméthacrylates
- les dicyclohexylbenzènes polymérisables, décrit dans le document GB0217907
- les composés monocycliques polymérisables, décrit dans le document DE10257711
- les composés polymérisables comprenant un groupe acide cinnamique un groupe acétylène, décrit dans le document GB0308987
- les tolanes polymérisables, décrit dans le document GB0308984
- les acétylènes hétérocycliques polymérisables décrit dans le document GB0308990.

On peut choisir des polymères ayant une tenue en température pour réaliser un vitrage feuilleté par exemple au moins 100°C, 120°C, 140°C.

Il en est de même pour les cristaux liquides ainsi que l'empilement de couches.

Naturellement les cristaux liquides peuvent s'étendre sensiblement sur toute la surface de la première électrode (et/ou du substrat) ou sur (au moins) une zone restreinte, les cristaux liquides peuvent être éventuellement sur plusieurs zones.

La couche électroactive peut être une pleine couche (de toute forme notamment géométrique) ou former une signalétique (symbole, pictogramme etc).

La couche électroactive peut être entourée et même être en contact avec un joint adhésif de scellement polymérique par exemple en époxy en acrylate par exemple en cyanoacrylate.

Par ailleurs, on utilise des espaceurs qui peuvent être de préférence en une matière plastique transparente. Les espaceurs déterminent (grossièrement) l'épaisseur de la couche électroactive. On préfère par exemple des espaceurs en polyméthacrylate de méthyle (PMMA).

Les espaceurs sont de préférence en matière d'indice optique (sensiblement) égal à l'indice optique de la couche. Les espaceurs sont par exemple sous forme de billes.

Le substrat diélectrique de la première électrode (et/ou le support de la deuxième électrode) peut être en matière plastique flexible ou non, par exemple d'épaisseur d'au plus 300µm ou 150µm ou d'au moins 1mm.
notamment, à base de polyester en particulier un polyéthylène téréphtalate (PET), polyéthylène naphtalate (PEN), de polycarbonate (PC), un polyoléfine (polyéthylène, polypropylène), de polyuréthane (PU), de polyméthacrylate de méthyle (PMMA), de polyamide, de polyimide, ou un polyvinyle chloride (PVC) voire de polymère fluoré tel que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP).

L'absorption est de préférence de moins de 0,5% ou même d'au plus 0,2% et avec un flou de moins de 1,5% et même d'au plus 1%.

On préfère le PET par sa transparence, sa qualité de surface, sa résistance mécanique, sa disponibilité, à toute tailles ou encore le PC ou le PMMA. Le choix dépend notamment de la flexibilité recherchée.

Le substrat diélectrique de la première électrode (et/ou le support de la deuxième électrode ) peut être de plus grande dimension que la couche électroactive.

En particulier ledit substrat (et/ou ledit support) peut être revêtu d'une couche électroconductrice couvrant tout ou partie sa face principale (par exemple au moins 50% ou 80%) et dont une région forme la première électrode (la deuxième électrode) notamment isolée électriquement (par une ou des lignes isolantes, gravure laser etc) d'une autre région de cette couche. Cette couche électroconductrice peut être basse émissivité servir de couche de contrôle solaire.

On peut utiliser par exemple un film clair de PET revêtu d'une couche électroconductrice, par exemple film clair de PET dénommé XIR de la société Eastman, un film coextrudé en PET-PMMA, par exemple du type SRF 3M^{®} (SRF pour Solar Reflecting Film), mais aussi de nombreux autres films (par exemple en PC, PE, PEN, PMMA, PVC) etc.

L'une des faces externes libres de l'empilement peut comprendre un film plastique temporaire de protection (« liner » en anglais) et avec une couche adhésive (acrylique etc) couvrante -en pleine face- ou formant un cadre périphérique. Cette couche adhésive peut servir à fixer l'empilement sur tout type de support plan, ou courbé, transparent comme un vitrage ou un film plastique, ou opaque (mur) si le dispositif est un miroir commutable (l'électrode destinée à être coté support est alors réfléchissante).

Pour les électrodes on peut utiliser des polymères conducteurs de l'une au moins des familles suivantes :
- la famille des polythiophènes, comme le PEDOT (3,4-polyéthylenedioxythiopène), le PEDOT/PSS c'est-à-dire le (3,4-polyéthylènedioxythiopène mélangé avec polystyrènesulfonate, et tout autre dérivé comme décrit dans la demande US2004253439,
- ou encore les poly(acétylène)s, poly(pyrrole)s, poly(aniline)s, poly(fluorène)s, poly(3-alkyl thiophène)s, polytétrathiafulvalènes, polynaphthalènes, poly(p-phénylène sulfide), et poly(para-phénylène vinylène)s.

Pour les polythiophènes, on peut choisir par exemple le produit commercialisé par la société HC Strack sous le nom de BAYTRON^{®} ou encore par la société Agfa sous le nom d'Orgacon^{®}, ou d'Orgacon EL-P3040^{®}.

Pour lier l'empilement de couches à une feuille on peut utiliser un PSA.

Les PSA sont généralement à base d'élastomère couplé avec un agent adhésif supplémentaire approprié ou agent « tackifiant » (par exemple, une résine ester).

Les élastomères peuvent être à base:
1/ d'acrylates, qui peuvent être suffisamment collant pour ne pas exiger un agent tackifiant supplémentaire.
2/ de nitriles
3/ de silicone, requérant des agents tackifiants spéciaux telles que des résines de silicate de type « MQ », composées de triméthyle silane monofonctionnel ("M") qui a réagi avec tétrachlorure de silicium quadrifonctionnel ("Q"). Les PSA à base de silicone sont par exemple des gommes et résines de polydiméthylsiloxane dispersées dans du xylène ou un mélange de xylène et toulène.
4/ des copolymères blocs à base de styrène tel que des copolymères blocs Styrène butadiène -styrène (SBS), Styrène-éthylène / butylène -styrène (SEBS), styrène-éthylène / propylène (SEP), Styrène isoprène -styrène (SIS),
5/ Les éthers vinyliques.

Avantageusement, l'adhésif sensible à la pression est choisi parmi les PSA à base d'acrylates et les PSA à base de silicone.

Ces adhésifs sont commercialisés sous forme de rouleaux d'adhésifs double face.

On peut citer comme PSA à base de silicone les adhésifs de Dow Corning^{®} tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive.

Dans des réalisations préférées, l'empilement peut comporter la séquence (stricte ou non) suivant (les éléments entre parenthèses étant facultatif)
- empilement n°1 : (anti-rayures ou 'liner')/ substrat PET/ première électrode (comme ITO etc)/( première couche d'ancrage) /couche électroactive/ )/( deuxième couche d'ancrage)/ /deuxième électrode (comme ITO etc)/ support PET/ (anti-rayures)
- empilement n°2 : Verre (teinté et/ou bombé par exemple/ premier feuillet d' intercalaire de feuilletage (PVB ou EVA) ou colle optique /substrat PET/ première électrode (comme ITO etc)/( première couche d'ancrage) /couche électroactive/ )/( deuxième couche d'ancrage)/ /deuxième électrode (comme ITO etc)/ support PET/ (anti-rayures)/ deuxième feuillet d' feuilletage intercalaire de feuilletage (PVB ou EVA, comme le premier) ou colle optique/ Verre (teinté et/ou bombé par exemple

Chaque film est de préférence flexible, plan ou courbe, apte à s'adapter à la ou aux courbures d'un vitrage ou autre support par exemple. Chaque substrat, support peut être flexible, plan ou courbe, apte à s'adapter à la ou aux courbures d'un vitrage additionnel ou autre support par exemple.

Les faces principales de chaque couche (et/ou de chaque substrat) peuvent être rectangulaires, carrées ou même de toute autre forme (ronde, ovale, polygonale...). Chaque couche barrière et/ou substrat peut être de grande taille par exemple de surface supérieure à 0,02 m² voire même 0,5 m² ou 1 m².

La ou chaque couche -dépôt ou film- (et/ou chaque substrat) peut être transparente et présenter de préférence une transmission lumineuse T_{L} supérieure ou égale à 70%, de préférence supérieure ou égale à 80% voire à 90%.

La ou chaque couche -dépôt ou film-, peut être teinté par exemple en bleu, vert, gris ou bronze. La transmission lumineuse TL peut alors d'au plus 55%, notamment de 20 % à 50%.

La ou chaque substrat notamment en verre peut être toutefois teinté par exemple en bleu, vert, gris ou bronze.

La première et/ou la deuxième électrode peuvent être des couches pleines plutôt que patternées (avec des trous et/ou lignes de discontinuités).

Sur le substrat (ou support) diélectrique, la première électrode (la deuxième électrode) de préférence transparente peut être minérale, notamment la couche électroconductrice minérale est à base d'un ou plusieurs oxydes conducteurs transparents ou une couche métallique d'au plus 20nm de préférence au sein d'un empilement de couches minces d'oxydes et/ou de nitrures métalliques ou de silicium.

La première électrode et/ou la deuxième électrode peut être une couche d'oxyde transparent conducteur dite couche TCO.

La couche de TCO est de préférence d'épaisseur adaptée pour avoir une résistance (« intrinsèque ») par carré inférieure ou égale à 150Ω/□, de préférence inférieure ou égale à 120Ω/□.

La couche de TCO est par exemple alimentée électriquement via des moyens d'amenée de courant de préférence métalliques (à base d'argent, de cuivre etc) de préférence sous forme d'une bande (métallique) /le long d'un bord.

Le film barrière ou le substrat (support) porteur de la couche TCO peut dépasser au-delà de la couche électroactive pour favoriser la connexion électrique par exemple faite comme dans la demande WO2011/161391 (figure 1 ou autres figures) ou EP1653275.

La couche d'un oxyde transparent électroconducteur est de préférence une couche d'oxyde d'étain et d'indium (ITO). D'autres couches sont possibles, parmi lesquelles les couches minces :
- à base d'oxyde d'indium et de zinc (appelées « IZO »), d'oxyde d'indium de galium et de zinc (IGZO)
- à base d'oxyde de zinc dopé, de préférence au gallium ou à l'aluminium (AZO, GZO), à base d'oxyde de titane dopé au niobium, à base de stannate de cadmium ou de zinc,
- à base d'oxyde d'étain dopé au fluor (SnO₂:F), à base d'oxyde d'étain dopé à l'antimoine.

Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%.

Pour les couches à base d'oxyde d'étain dopé au fluor, le pourcentage atomique de fluor est de préférence d'au plus 5%, généralement de 1 à 2%.

L'ITO est particulièrement préféré ou même IZO, AZO, GZO ou IGZO. Aisément déposées par un procédé de pulvérisation cathodique, notamment assisté par champ magnétique, appelé « procédé magnétron », ces couches se distinguent par une plus faible rugosité que par CVD.

Les électrodes communément utilisées sont en oxyde mixte d'indium et d'étain (ITO en anglais). Pour se prémunir des court circuits générés par des impuretés conductrices de taille supérieure ou égale à la distance entre les électrodes, chacune des couches ITO peut être revêtue d'une ou plusieurs couches diélectriques d'oxydes ou de nitrures telles que Si₃N₄, SiO₂, comme évoqué dans le document WO2014/072596 d'épaisseur cumulée de 50 à 150nm.

Un des avantages de l'oxyde d'étain dopé au fluor est en revanche sa facilité de dépôt par dépôt chimique en phase vapeur (CVD), et peut être mis en œuvre sur la ligne de production de verre plat par flottage. Dans un mode de réalisation, les couches de l'empilement sont obtenues par dépôt chimique en phase vapeur, directement sur la ligne de production de la feuille de verre par flottage. Le dépôt est réalisé par pulvérisation de précurseurs au travers de buses, sur le ruban de verre chaud. Le dépôt des différentes couches peut se faire à différents endroits de la ligne : dans l'enceinte de flottage, entre l'enceinte de flottage et l'étenderie, ou dans l'étenderie. Les précurseurs sont généralement des molécules organométalliques ou du type halogénures.

A titre d'exemples, on peut citer pour l'oxyde d'étain dopé au fluor le tétrachlorure d'étain, le trichlorure de mono-butyl étain (MTBCL), l'acide trifluoroacétique, l'acide fluorhydrique. L'oxyde de silicium peut être obtenu à l'aide de silane, de tétraéthoxysilane (TEOS), ou encore d'hexamethyldisiloxane (HDMSO), en utilisant éventuellement un accélérateur tel que le triéthylphosphate.

On peut également disposer, entre le substrat et la couche TCO un empilement de couches, de neutralisation. De telles couches (au moins deux couches) permettent d'influer sur l'aspect en réflexion du vitrage, notamment sur sa couleur en réflexion. Une fois le support électroconducteur revêtu de la couche de cristaux liquides (et même une fois rajouté un autre support électroconducteur identique), on obtient des couleurs de préférence neutres, légèrement bleutées ou vertes, caractérisées par des coordonnées colorimétriques a*, b* proches de 0, a*, b* négatives ou a* négative et b* légèrement positif, sont préférées à des couleurs violet rose, rouge (a* plus positive).

Dans un mode de réalisation préféré, l'empilement comprend dans cet ordre sur la face principale sous la couche TCO :
- une première sous-couche à base de nitrure de silicium (SiNₓ, de préférence Si₃N₄) éventuellement dopé de préférence aluminium, d'épaisseur e_{y} de 5 à 50nm, ou mieux de 10nm à 35nm, de préférence (directement) en contact avec la face principale et de préférence essentiellement constituée d'un nitrure de silicium éventuellement dopé de préférence aluminium ;
- une deuxième sous-couche à base d'oxyde de silicium (SiOₓ, de préférence SiO₂), d'épaisseur e_{z} de 10 à 50nm, ou mieux de 20nm à 50nm, de préférence essentiellement constituée d'oxyde de silicium, sous couche non dopée ou éventuellement dopé de préférence aluminium de préférence en contact avec la couche TCO.

Plus largement la sous couche (unique notamment) peut être une couche à base d'oxynitrure de silicium (SiON)

Quelques exemples d'empilements de couches minces formant la première électrode sont donnés ci-après :
- SiNₓ / SiOₓ / TCO (ITO de préférence) / SiNₓ / (SnZnO) / SiOₓ
- SiNₓ / SiOₓ / TCO (ITO de préférence) / SiNₓ / SnZnO / SiOₓ
- SiNₓ / (SnZnO)/ SiOₓ / TCO (ITO de préférence) / SiNₓ / (SnZnO) / SiOₓ.
- SIOxNy / TCO (ITO de préférence) / SiOxN_{y} / (SnZnO) / SiOₓ

Les différentes couches peuvent être déposées sur le substrat par tout type de procédé de dépôt de couche mince. Il peut par exemple s'agir de procédés, pyrolyse (liquide ou solide), dépôt chimique en phase vapeur (CVD), notamment assisté par plasma (PECVD en anglais), éventuellement sous pression atmosphérique (APPECVD), évaporation voire de type sol-gel.

Le dispositif selon l'invention peut comporter un vitrage feuilleté comportant :
- une première feuille de verre additionnelle notamment d'épaisseur de 0,7mm à 4mm
- un intercalaire de feuilletage thermoplastique
- une deuxième feuille de verre additionnelle notamment d'épaisseur de 0,7mm à 4mm ou même de moins de 0,7mm ou encore une feuille de plastique comme un polycarbonate ou un PMMA (notamment avec un intercalaire de feuilletage en PU) les faces principales internes dites F2 et F3 des première et deuxième feuilles de verre additionnelles étant en regard, l'empilement étant les faces F2 et F3 et de préférence dans l'intercalaire de feuilletage.

De préférence l'intercalaire feuilletage thermoplastique entoure le chant de l'empilement.

La tranche de l'empilement peut être en retrait par rapport à la tranche la plus externe de l'intercalaire de feuilletage (ou de la première feuille).

De préférence les éventuels premier et/ou deuxième substrats sont de préférence d'épaisseur d'au plus 0,7mm et même d'au plus 0,3 ou 0,2mm. Pour le ou les substrats en verre on peut choisir du verre mince (moins de 1mm) et même ultramince ('UTG ' en anglais).

L'une des feuilles de verre additionnelle peut être teintée et l'autre clair ou extraclair. L'intercalaire de feuilletage thermoplastique peut être clair, extraclair ou teinté.

Le dispositif selon l'invention peut comprendre un vitrage notamment feuilleté et/ou bombé, et l'empilement forme une bande notamment périphérique sur une portion d'une face principale du vitrage.

On peut utiliser le dispositif à diffusion variable par cristaux liquides tel que défini précédemment dans un véhicule ou bâtiment.

Il peut être utilisé notamment comme:
- cloison interne (entre deux pièces ou dans un espace) dans un bâtiment, dans un véhicule terrestre, ferroviaire, maritime ou aérien (entre deux compartiments, dans un taxi, bus, train etc), notamment comme paroi vitrée de douche, baignoire,
- porte vitrée (d'entrée ou de service), fenêtre (simple, double, triple vitrage), plafond, dallage (sol, plafond), porte de WC, une partie vitrée de meuble urbain ou domestique
- vitrage d'un véhicule automobile (voiture, camion, bus, car ..) donc terrestre, ferroviaire, maritime (bateau) : pare-brise, vitrage latéral, toit ..
- écran de projection ou rétroprojection,
- façade de magasin, vitrine notamment d'un guichet.

Naturellement, il peut former tout ou partie d'un vitrage (une cloison et fenêtre type imposte etc.).

Le dispositif selon l'invention peut comporter un vitrage feuilleté et notamment bombé, et l'empilement de couches est entre les premier et deuxième vitrages respectivement dits vitrages extérieur et intérieur et forme une bande périphérique sur une portion supérieure du vitrage, la tranche dite externe de l'empilement étant masqué de l'extérieur par une première couche périphérique opaque notamment un émail sur le vitrage extérieur (de préférence en face F2), et/ou la tranche dite interne de l'empilement étant masqué de l'intérieur par une deuxième couche périphérique opaque notamment un émail sur le vitrage intérieur (en face F4 par exemple voire face F3).

Pour son intégration dans un vitrage feuilleté on peut utiliser :
- trois feuillets (PVB, EVA, PU etc, monocouche ou multicouche) en particulier deux feuillets pleins avec chacun en contact avec l'un des deux vitrages et un feuillet central avec une réserve pour loger l'empilement
- deux feuillets (PVB, EVA, PU etc monocouche ou multicouche) surtout si l'empilement est assez mince pour que les deux feuillets se rejoignent par fluage de part et d'autre l'empilement.

Pour le substrat et/ou le support ou encore ou pour une feuille de verre additionnelle ou un vitrage d'un vitrage feuilleté et/ou multiple on peut choisir un verre clair ou extra-clair. Un verre clair contient typiquement une teneur pondérale en oxyde de fer de l'ordre de 0,05 à 0,2%, tandis qu'un verre extra-clair contient généralement environ 0,005 à 0,03% d'oxyde de fer.

La feuille de verre additionnelle ou un vitrage d'un vitrage feuilleté et/ou multiple, peut être toutefois teinté par exemple en bleu, vert, gris ou bronze.

Une feuille de verre additionnelle teinté ou un vitrage teinté d'un vitrage feuilleté et/ou multiple, peut présenter de préférence une transmission lumineuse T_{L} supérieure ou égale à 10% - par exemple dans un contexte où le milieu du côté de la face extérieure du substrat (opposée à la face avec l'électrode) est très éclairé -, et de préférence est supérieure ou égale à 40%.

Le verre est de préférence de type silico-sodo-calcique mais il peut également être en verre de type borosilicate ou alumino-borosilicate. L'épaisseur du verre est généralement comprise dans un domaine allant de 0,5 mm à 19 mm, de préférence de 0,7 à 9 mm, notamment de 2 à 8 mm, voire de 4 à 6 mm.

Le verre est de préférence du type flotté, c'est-à-dire susceptible d'avoir été obtenu par un procédé consistant à déverser le verre fondu sur un bain d'étain en fusion (bain « float »). Dans ce cas, l'empilement peut aussi bien être déposé sur la face « étain » que sur la face « atmosphère » du substrat. On entend par faces « atmosphère » et « étain », les faces du substrat ayant été respectivement en contact avec l'atmosphère régnant dans le bain float et en contact avec l'étain fondu. La face étain contient une faible quantité superficielle d'étain ayant diffusé dans la structure du verre.

L'intercalaire de feuilletage thermoplastique assure une liaison avec un élément rigide ou flexible. Cet intercalaire de feuilletage polymère peut être, notamment, une couche à base de polybutyral de vinyle (PVB), d'éthylène vinylacétate (EVA), de polyéthylène (PE), de polychlorure de vinyle (PVC), d'uréthane thermoplastique, de polyuréthane PU, de ionomère, d'adhésif à base de polyoléfine, de silicone thermoplastique ou en résine pluri ou mono-composants, réticulable thermiquement (époxy, PU) ou aux ultraviolets (époxy, résine acrylique).

L'intercalaire PVB peut être en coin donc avec une section transversale diminuant en forme en coin du haut vers le bas du vitrage feuilleté pour éviter une double image dans le cas d'un affichage tête haute (HUD en anglais), tout particulièrement pour un pare-brise.

L'intercalaire PVB est éventuellement acoustique et/ou teinté.

L'intercalaire PVB acoustique peut comprendre au moins une couche dite centrale en matériau plastique viscoélastique aux propriétés d'amortissement vibro-acoustique notamment à base de polyvinylbutyral (PVB) et de plastifiant, et comprenant en outre deux couches externes en PVB standard, la couche centrale étant entre les deux couches externes.

Eventuellement l'une ou les deux couches externes a une section transversale diminuant en forme en coin du haut vers le bas du vitrage feuilleté, la couche en matériau plastique viscoélastique aux propriétés d'amortissement vibro-acoustique ayant une section transversale constante du haut vers le bas du vitrage feuilleté. exemple de feuillet acoustique on peut citer le brevet EP0844075.

Le premier et/ou deuxième vitrage du vitrage feuilleté peut (selon le rendu esthétique, l'effet optique souhaité) être un verre clair (de transmission lumineuse T_{L} supérieure ou égale à 90% pour une épaisseur de 4mm), par exemple un verre de composition standard sodocalcique le Planilux^{®} de la société Saint-Gobain Glass, ou extra-clair (T_{L} supérieure ou égale à 91,5% pour une épaisseur de 4 mm), par exemple un verre silico-sodo-calcique avec moins de 0,05% de Fe III ou de Fe₂O₃ le verre Diamant^{®} de Saint-Gobain Glass, ou Optiwhite^{®} de Pilkington, ou B270^{®} de Schott, ou d'autre composition décrite dans le document WO04/025334.on peut aussi choisir le verre Planiclear^{®} de la société Saint-Gobain Glass.

Le verre du premier et/ou deuxième vitrage peut être neutre (sans coloration), ou (légèrement) teinté notamment gris ou vert, tel le verre TSA de la société Saint-Gobain Glass. Le verre du premier et/ou deuxième vitrage peut avoir subi un traitement chimique ou thermique du type durcissement, recuit ou une trempe (pour une meilleure résistance mécanique notamment) ou être semi trempé.

La transmission lumineuse T_{L} peut être mesurée selon la norme ISO 9050 :2003 en utilisant l'illuminant D65, et est la transmission totale (notamment intégrée dans le domaine du visible et pondérée par la courbe de sensibilité de l'oeil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Le vitrage feuilleté bombé selon l'invention notamment pare-brise ou vitrage latéral, peut avoir une T_{L} -dans le clair de vitre- qui est de préférence d'au moins 70% et même d'au moins 75% ou même d'au moins80%.

Le vitrage feuilleté bombé selon l'invention, notamment toit vitré, peut avoir une transmission lumineuse T_{L} d'au plus 10% et même de 1 à 6%.

Pour un toit automobile, on préfère l'un au moins ou tous les critères suivants :
- une transmission énergétique T_{E} d'au plus 10% et même de 4 à 6%,
- une réflexion énergétique R_{E} (de préférence côté face F1) d'au plus 10%, mieux de 4 à 5%
- et une transmission totale de l'énergie solaire TTS <30% et même <26%, même de 20 à 23%.

Un tableau A ci-dessous donne des exemples de verre vendu par la Demanderesse. Le verre SGS THERMOCONTROL ^{®} Absorbing/ Venus améliore le confort thermique en absorbant la charge énergétique dans la masse du verre. Ces verres sont divisés en deux catégories : « Vision » (Transmission lumineuse>70%) et « Privacy » (Transmission lumineuse <70%).

**Tableau A**

| Type de verre | TL (%) | TE (%) | RE (%) |
|---|---|---|---|
| SGS THERMOCONTROL^{®} Venus Green 55 | 49 | 27 | 7 |
| Haute Performance teinté vert // Verre Clair | 28 | 16 | 3 |
| SGS THERMOCONTROL^{®} Venus Green 35 | 35 | 22 | 5 |
| SGS THERMOCONTROL^{®} Venus Grey 10 | 10 | 8 | 1 |
| SGS THERMOCONTROL^{®} Absorbing TSA3+ | 71 | 44 | 18 |
| Verre standard vert | 78 | 53 | 25 |

Le verre « Vision » est adapté à tous les types de vitrage dans le véhicule: vert/ bleu/gris et assure une transmission énergétique réduite (TE). La couleur la plus appréciée à cette fin est le vert. Elle a été choisie en raison de son aspect neutre qui n'affecte pas l'harmonie des couleurs d'un véhicule.

Le verre « Privacy » est un vitrage teinté dans la masse pour le confort thermique et l'intimité. C'est un vitrage surteinté vert foncé ou gris foncé. Pour assurer l'intimité, ce vitrage présente des valeurs de transmission lumineuse qui sont au-dessous de 70%, généralement autour de 55% ou moins. En raison de sa teinte foncée, ce type de verre assure aussi une faible transmission UV (les rayons UV peuvent causer des irritations de la peau).

Dans la plupart des pays, le verre Vénus / Privacy est adapté aux vitrages latéraux arrière (après le pilier B), lunette arrière et toit.

SGS THERMOCONTROL ^{®} Venus est constitué de vitrage surteinté de couleur gris foncé ou vert foncé. Ils ont tous les avantages thermiques du verre de type « Vision » (SGS THERMOCONTROL ^{®} Type) avec une protection solaire améliorée:
- des valeurs plus faibles en transmission énergétique (par rapport à toutes les autres solutions de verre),
- sa couleur foncée bloque également le rayonnement UV, qui est responsable de l'irritation de la peau et la décoloration de l'habitacle,
- offre une plus grande intimité pour les passagers du véhicule (il est difficile de voir à travers le verre depuis l'extérieur).

De préférence le vitrage feuilleté bombé forme un pare-brise de véhicule routier tel qu'une automobile, un camion.

Le bombage des premier et deuxième vitrages (pare-brise notamment) peut être dans une ou plusieurs directions par exemple décrit dans le document WO2010136702.

L'aire de la face principale F1 (parebrise ou toit notamment) peut être supérieure à 1,5m² et être par exemple inférieure à 3m².

Afin de limiter l'échauffement dans l'habitacle ou de limiter l'usage d'air conditionné, l'un des vitrages au moins (de préférence le verre extérieur) est teinté, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), là où chaque couche d'argent étant disposée entre des couches diélectriques.

On peut cumuler couche (à l'argent) en face F2 et/ou F3 et couche TCO en face F4.

Une couche TCO (d'un oxyde transparent électro-conducteur) peut être utilisée pour la première ou deuxième électrode ou en face F4 comme décrit. Elle est de préférence une couche d'oxyde mixte d'étain et d'indium (ITO) ou une couche d'oxyde d'étain dopé au fluor (SnO₂:F). D'autres couches sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm.

Par exemple la couche basse émissivité comprend la séquence suivante :sous-couche haut indice/sous-couche bas indice/ une couche TCO/ surcouche diélectrique optionnelle.

Un exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm))/ surcouche bas indice (<90 nm) barrière/ dernière couche (< 10 nm).

On peut citer couche basse émissivité celles décrites dans le brevet US2015/0146286, sur la face F4, notamment dans les exemples 1 à 3.

En particulier, la face F4 du vitrage feuilleté, est revêtue d'une couche fonctionnelle transparente notamment basse émissivité, de préférence comprenant une couche TCO, dont une zone (alimentée électriquement, donc électrode) formant bouton tactile (pour piloter la première surface lumineuse).

On peut prévoir des connexions électriques avec les électrodes. Par exemple on utilise une première bande électroconductrice (métallique etc) périphérique le long de la première électrode et une deuxième bande électroconductrice périphérique le long de la deuxième électrode. Par exemple la première bande électroconductrice est le long du premier bord latéral ou longitudinal et la deuxième bande électroconductrice est le long d'un deuxième bord opposé (latéral ou longitudinal) et/ou adjacent.

Des rubans conducteurs notamment métalliques par exemple en cuivre, et par exemple d'au plus larges de 2cm, sont par exemple fixés en périphérie sur les électrodes (un ruban par électrode, les rubans étant de préférence sur des bords opposés) pour l'alimentation électrique.

On peut fixer (soudure, colle) des câbles électriques sur ces bandes électroconductrices.

Le dispositif selon l'invention peut être utilisé en combinaison avec d'autres dispositifs électrocommandables tels que ceux avec des systèmes électroluminescents (ensemble de diodes inorganique ponctuels DEL, diodes organiques ou OLED, TFEL (à couches minces)

Les deux peuvent être en regard ou adjacent au sein d'un vitrage feuilleté (de l'intercalaire de feuilletage.

Le dispositif selon l'invention peut être utilisé notamment dans un vitrage feuilleté, en combinaison avec un autre dispositif électrocommandable tel qu'un dispositif électrocommandable électrominescent, en particulier, LED, OLED, TFEL.

Dans un exemple de fabrication, on mélange les cristaux liquides avec un monomère et une petite quantité de photoinitiateur ( les cristaux liquides jouant le rôle de solvant) on réalise la polymérisation thermiquement ou photochimiquement (plus rapide, favorise un réseau polymérique à l'échelle moléculaire).

L'invention vise ainsi un procédé de fabrication du dispositif électrocommandable à diffusion par cristaux liquides notamment comme décrit précédemment comportant les étapes suivantes :
- une fourniture d'une première électrode notamment sur un substrat diélectrique une fourniture d'une deuxième électrode notamment sur un support diélectrique
- la fourniture d'un mélange comportant :
   - au moins un précurseur de polymère
   - des cristaux liquides incluant au moins des premiers cristaux liquides présentant une mésophase P et éventuellement au moins des deuxièmes cristaux liquides
      le mélange présentant la mésophase P et une mésophase P', TA étant la température de transition entre la mésophase P et la mésophase P' du mélange
   - si nécessaire un amorceur de polymérisation, de préférence un photo amorceur
- la formation d'un empilement de couches comportant entre les première et deuxième électrodes, la formation à partir dudit mélange d'une couche électroactive en une matière comportant lesdits cristaux liquides stabilisés par un réseau polymérique, ladite formation comportant :
   - à la température Ti inférieure à TA, donc en mésophase P', la polymérisation de préférence par photopolymérisation de préférence sous ultraviolet ou UV du ou desdits précurseurs conduisant audit réseau polymérique.

Lorsque les premiers cristaux liquides présentent la mésophase P et la mésophase P', les premiers cristaux liquides ont une température de transition Tp entre la mésophase P et la mésophase P', TA étant de préférence est inférieure ou égale à Tp, la polymérisation est à la température Ti inférieure à Tp ou TA.

La mésophase P peut être une mésophase nématique torsadée par l'ajout d'un agent chiral dans le mélange (en phase P' de préférence ou en phase P). Ainsi sans agent chiral la mésophase P des premiers cristaux liquides peut être nématique non torsadée.

L'invention vise en particulier un procédé de fabrication du dispositif électrocommandable à diffusion par cristaux liquides notamment comme décrit précédemment comportant les étapes suivantes :
- une fourniture d'une première électrode notamment incluant ou revêtue d'une première couche d'ancrage de surface de cristaux liquides selon une première orientation planaire éventuellement dégénéré, première électrode notamment sur un substrat diélectrique
   une fourniture d'une deuxième électrode notamment incluant ou revêtue d'une couche d'ancrage de surface de cristaux liquides selon une deuxième orientation notamment planaire dégénérée ou normal, deuxième électrode notamment sur un support diélectrique
- la fourniture d'un mélange comportant :
   - au moins un précurseur de polymère (comme un monomère)
   - des cristaux liquides incluant au moins des premiers cristaux liquides présentant une mésophase P et une mésophase P' et éventuellement au moins des deuxièmes cristaux liquides, les premiers cristaux liquides ayant une température de transition Tp entre la mésophase P et la mésophase P', TA étant la température de transition entre la mésophase P et la mésophase P' du mélange qui est notamment inférieure ou égale à Tp
   - si nécessaire un amorceur de polymérisation, de préférence un photoamorceur
- la formation d'un empilement de couches comportant entre les première et deuxième électrodes, notamment les première et deuxième couches d'ancrage la formation à partir dudit mélange d'une couche électroactive en une matière comportant lesdits cristaux liquides stabilisés par un réseau polymérique avec une température T1 (notamment inférieure voire égale à Tp) de la mésophase P à la mésophase P', ladite formation comportant :
   - à la température Ti inférieure à Tp ou à TA (donc en mésophase P') la polymérisation de préférence par photopolymérisation sous UV desdits précurseurs conduisant audit réseau polymérique.

De préférence le procédé peut comprendre en mésophase P', de préférence qui n'est pas nématique et même smectique la formation de domaines notamment subcentimétriques avec des défauts topologiques bidimensionnels subsistant (sensiblement) en mésophase P.

La formation des défauts est notamment effectuée par l'une (au moins ou au choix) des étapes suivantes:
- par la mise en contact dudit mélange avec des première et deuxième couches d'ancrage des cristaux liquides en surface
- par application de contraintes (entre le substrat et le support)
- par application d'un champ électrique en particulier alternatif basse fréquence, d'au plus 100Hz, mieux 10Hz, le mélange comportant des particules chargées (molécules etc).

En particulier ladite formation de la couche électroactive comprend de préférence la mise en contact dudit mélange avec des première et deuxième couches d'ancrage des cristaux liquides en surface en particulier :
- dépôt par voie liquide d'une couche (diélectrique ou semi conducteur), ou fourniture d'un élément (diélectrique ou semi conducteur) comme un film submillimétrique lié (collé) à la première électrode (ou création d'une lame de gaz comme une lame d'air (pour ancrage normal)
- dépôt par voie liquide d'une couche (diélectrique ou semi conducteur), ou fourniture d'un élément (diélectrique ou semi conducteur) comme un film submillimétrique lié (collé) à la deuxième électrode ou création d'une lame de gaz comme une lame d'air (pour ancrage normal) entre la deuxième électrode et le mélange

On peut prévoir (au préalable) un brossage de surface de la première et /ou de la deuxième couche d'ancrage (pour former un ancrage planaire et unidirectionnel).

A la température T'>T en phase P la couche électroactive présente alors de domaines avec des défauts topologiques bidimensionnels (et présente avec des multiétats de diffusions variables).

Le mélange peut se faire notamment sous agitation à partir de précurseurs (monomères) en poudre avec des cristaux liquides thermotropes.

La couche électroactive peut être réalisée à l'aide d'une opération appelée remplissage goutte à goutte ou par capillarité dudit mélange.

De préférence, on contrôle l'intensité de la lampe UV pour contrôler au mieux la puissance reçue sur la surface exposée et donc le taux de réticulation, le degré de polymérisation.

On peut prévoir en outre que les premiers cristaux liquides ont une mésophase P' qui est smectique et une mésophase nématique P et des deuxièmes cristaux liquides ont une mésophase notamment nématique et sont dénuées de mésophase smectique.

Le précurseur de polymère, comme un monomère, est de préférence miscible avec le matériau cristal liquide (pas nécessairement en toutes proportions).

La limite haute va dépendre du mélange cristal liquide + monomère (limite de solubilité qui va être dépendante par ailleurs, pour un mélange donné, de la température et de la nature de la phase cristal liquide de ce mélange)

Le procédé peut comprendre une étape de feuilletage dudit empilement qui est notamment:
- substrat (flexible, polymérique, PET, UTG etc)/ première électrode/ (première couche d'ancrage)/couche électroactive/( deuxième couche d'ancrage) /deuxième électrode/ support (flexible, polymérique, PET, UTG etc)
- ou même première électrode/ première couche d'ancrage formant substrat/couche - électroactive/ deuxième couche d'ancrage formant support /deuxième électrode ceci entre deux feuilles de verre, notamment bombées, au moyen d'un intercalaire de feuilletage polymérique notamment thermoplastique par exemple PVB ou EVA, intercalaire de feuilletage comportant un ou plusieurs feuillets, notamment feuilletage à une température d'au plus 140°C et même 120°C, 110°C.

On peut prévoir donc un feuilletage. Pour former un vitrage feuilleté avec ledit empilement (support et substrat plastiques ou verre par exemple flexibles) entre deux feuilles de verre (par exemple d'épaisseur de 0,7mm à 5mm) on peut utiliser :
- trois feuillets (PVB, EVA, PU etc, monocouche ou multicouche) en particulier deux feuillets pleins avec chacun en contact avec l'un des deux vitrages et un feuillet central avec une réserve pour loger l'empilement
- deux feuillets (PVB, EVA, PU etc, monocouche ou multicouche) surtout si l'empilement est assez mince pour que les deux feuillets se rejoignent par fluage de part et d'autre l'empilement.

Le PVB est préféré dans le monde des véhicules.

L'une des feuilles de verre peut être teintée.

De manière classique le feuilletage comporte mise sous vide - par tout moyen d'aspiration-, chauffage et éventuelle mise sous pression. On utilise étuve ou autoclave Ainsi, le feuilletage peut comporter dégazage, scellage du bord, et implique la mise en œuvre de températures et pressions appropriées de manière habituelle, lors de l'autoclave, le feuillet tel que le PVB est amené à relativement haute température (supérieure à 100°C pour le PVB souvent entre 90°C et 140°C), ce qui va le ramollir et lui permettra de fluer. En cas d'utilisation de plusieurs feuillets notamment PVB, un phénomène remarquable se produit alors, les interfaces les différents PVB vont disparaitre, le PVB va en quelque sorte se cicatriser pour ne former en fin d'autoclave qu'un film homogène et continu.

Dans les conditions usuelles d'assemblage d'un vitrage feuilleté, combinant un chauffage, une mise sous dépression (vide) de l'intérieur de la structure feuilletée vise à évacuer l'air présent entre les différents constituants (surface de l'intercalaire de feuilletage rugueuse et irrégulière avant chauffage), et éventuellement l'application d'une pression à l'extérieur de la structure feuilletée pour favoriser le collage et la cohésion durable de l'ensemble.

D'autres détails et caractéristiques de l'invention apparaîtront de la description détaillée qui va suivre, faite en regard des dessins annexés suivants et dans lesquelles:
- la figure 1 représente une vue en coupe schématique d'un dispositif à diffusion variable par cristaux liquides 100 dans un premier mode de réalisation de l'invention

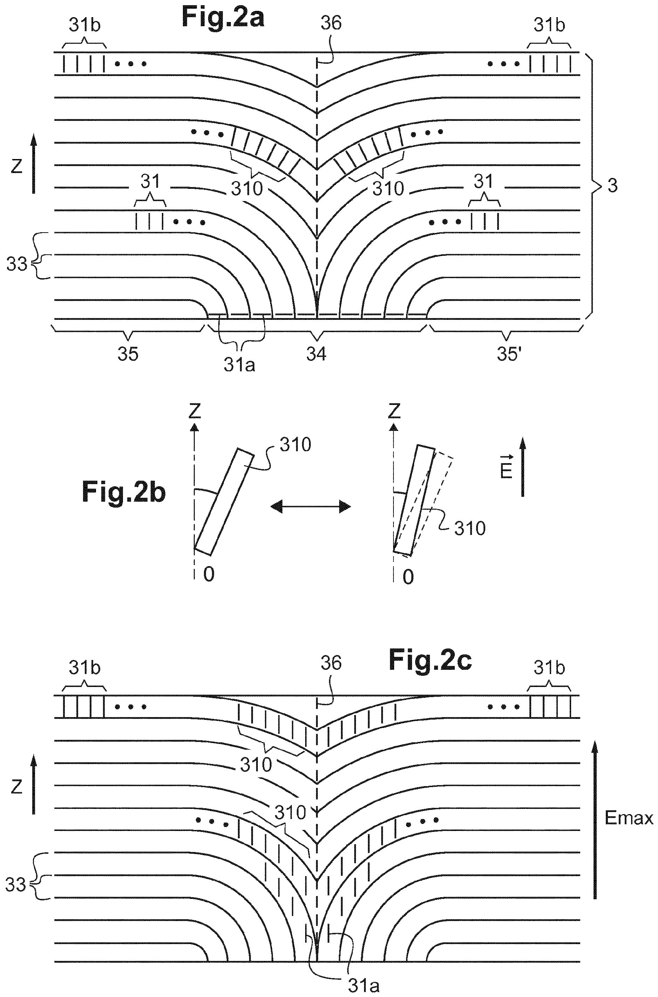

- les figures 2a et 2c représentent une vue en coupe schématique et de détail d'une couche électroactive du dispositif à diffusion variable par cristaux liquides du type de la figure 1 hors champ électrique ou sous champ électrique, la figure 2b illustrant l'orientation des certains cristaux liquides sous champ électrique

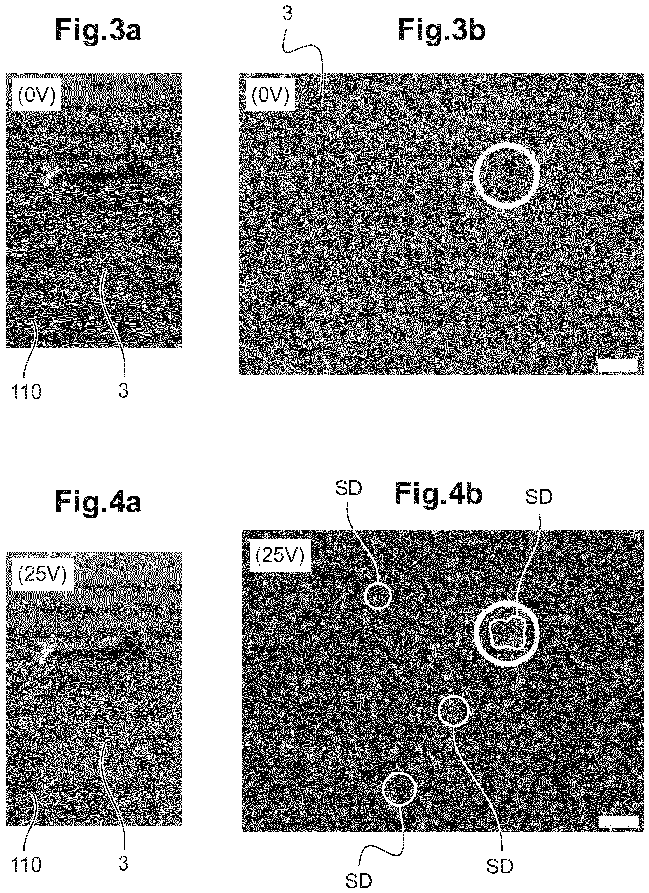

- les figures 3a à 7a montrent des images (en noir et blanc) du dispositif électrocommandable de la figure 1 dans une cabine de lumière avec une trame de fond 110 (papier avec des lignes d'écritures) à 20 cm et sous illuminant D65 en l'absence de champ électrique (3a), pour un champ électrique normal à la couche électroactive avec une tension de 25V (4a), de 50V (5a), de 70V (6a), et retour à OV (7a)
- les figures 3b à 7b montrent des images (en noir et blanc) obtenues par microscopie optique en lumière polarisée (MOP) sous un grossissement de 20 (avec une échelle en trait blanc de 50µm) images montrant les domaines à défauts lignes de la couche électroactive du dispositif électrocommandable de la figure 1 en l'absence de champ électrique (3b), pour un champ électrique normal à la couche électroactive avec une tension de 25V (4b), de 50V (5b), de 70V (6b), et retour à OV (7b)

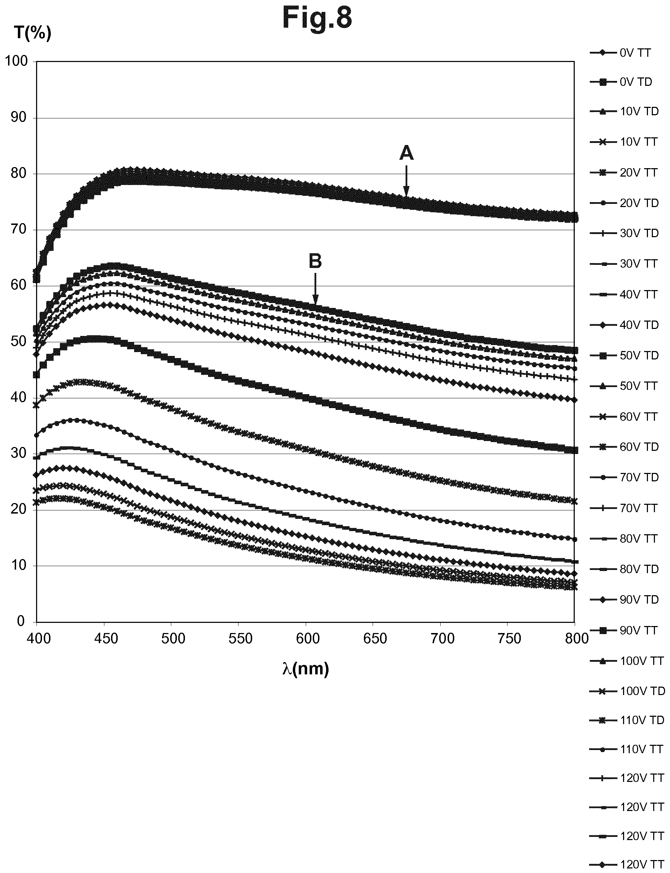

- la figure 8 montre un ensemble A de courbes correspondant à la transmission totale TT en fonction de la longueur d'onde entre 400 et 800nm sans champ électrique ou sous champ électrique normal à la couche électroactive avec une tension de 10V à 110V par pas de 10V et un ensemble de courbes B correspondant à la transmission diffuse TD en fonction de la longueur d'onde entre 400 et 800nm sans champ électrique ou sous champ électrique normal à la couche électroactive avec une tension de 10V à 110V par pas de 10V pour le dispositif de la figure1

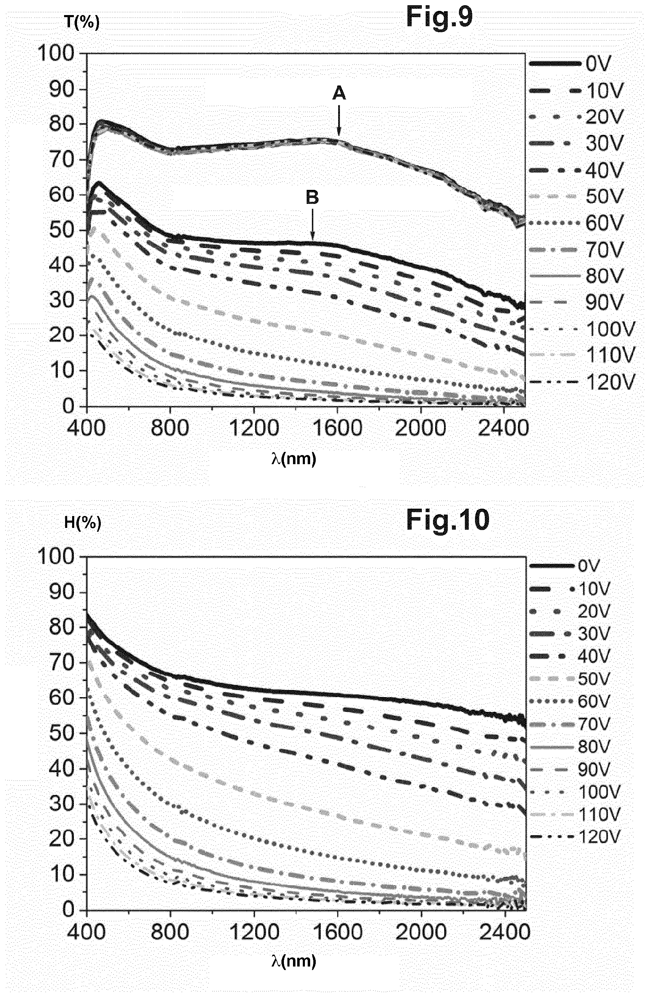

- la figure 9 montre un ensemble A de courbes correspondant à la transmission totale en fonction de la longueur d'onde entre 400 et 2500nm environ sans champ électrique ou sous champ électrique normal à la couche électroactive avec une tension de 10V à 120V par pas de 10V pour le dispositif de la figure1 et un ensemble de courbes B correspondant à la transmission diffuse en fonction de la longueur d'onde entre 400 et 2500nm environ sans champ électrique ou sous champ électrique normal à la couche électroactive avec une tension de 10V à 120V par pas de 10V pour le dispositif de la figure1
- la figure 10 montre un ensemble de courbes correspondant au flou H ( exprimé en %) qui est le rapport entre la transmission diffuse TD et la transmission totale TT en fonction de la longueur d'onde entre 400 et 2500nm environ sans champ électrique ou sous champ électrique normal à la couche électroactive avec une tension de 10V à 120V par pas de 10V et un ensemble de courbes B correspondant à la transmission diffuse en fonction de la longueur d'onde entre 400 et 2500nm environ sans champ électrique ou sous champ électrique normal à la couche électroactive avec une tension de 10V à 120V par pas de 10V pour le dispositif de la figure1

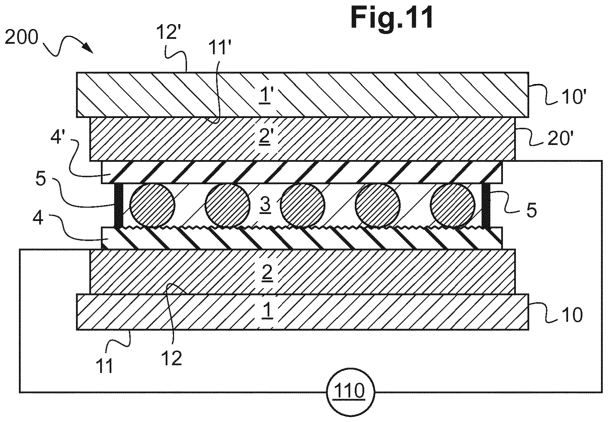

- la figure 11 représentant une vue en coupe schématique d'un dispositif à diffusion variable par cristaux liquides 200 dans un deuxième mode de réalisation de l'invention

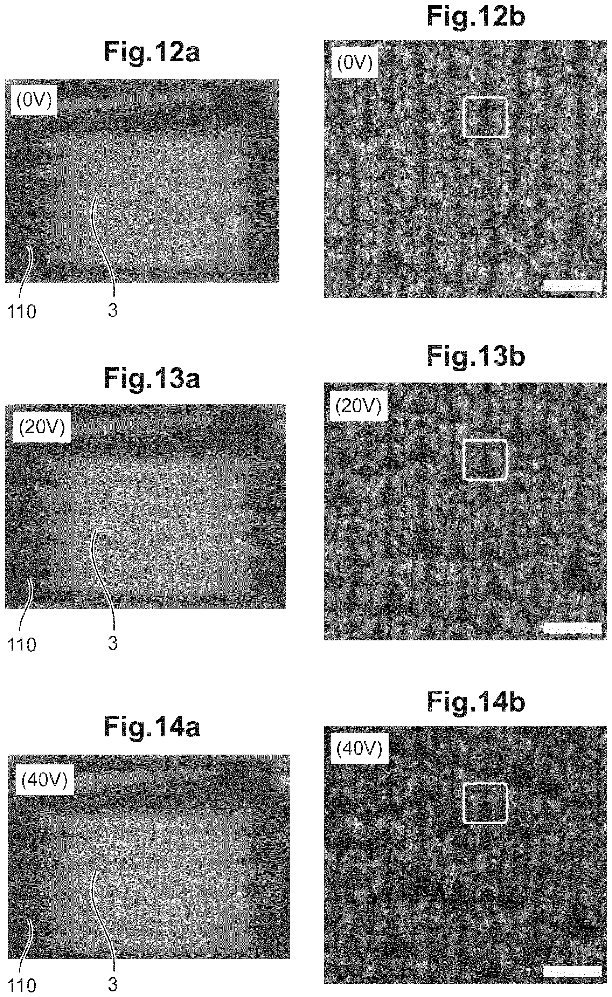

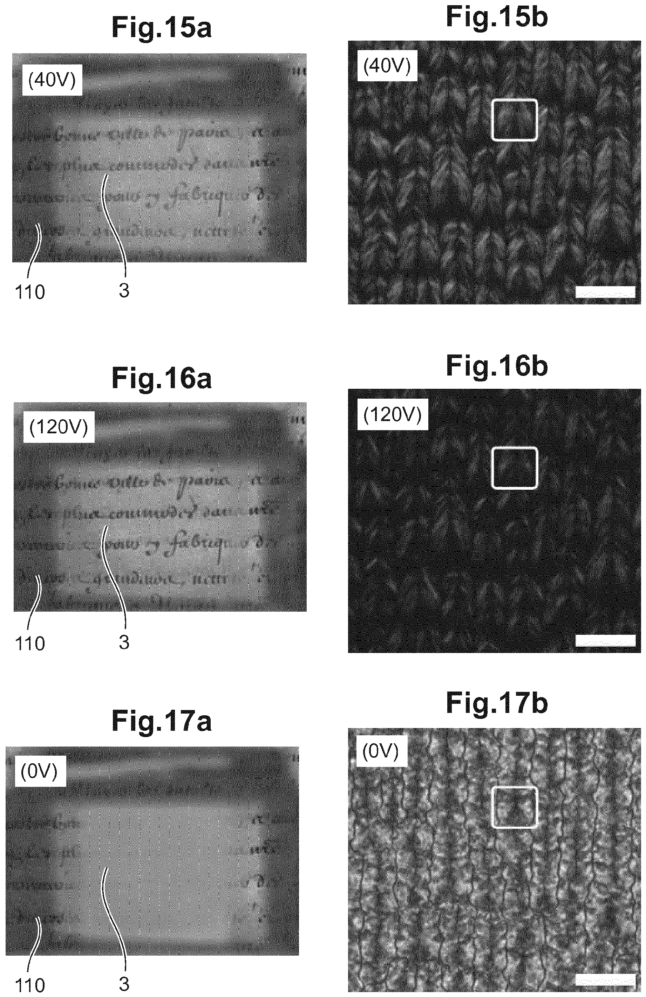

- les figures 12a à 17a montrent respectivement des images en noir et blanc du dispositif électrocommandable de la figure 11 dans une cabine de lumière avec une trame de fond 110 (papier avec des lignes d'écritures) à 20 cm et sous illuminant D65 en l'absence de champ électrique (12a), pour un champ électrique normale à la couche électroactive avec une tension de 20V (13a), de 40V (14a), de 70V (15a), de 120V (16a), et retour à OV (17a)
- les figures 12b à 17b montrent respectivement des images (en noir et blanc) obtenues par microscopie optique en lumière polarisée (MOP) sous un grossissement de 20 (avec une échelle en trait blanc de 50µm) images montrant les domaines à défauts lignes de la couche électroactive du dispositif électrocommandable de la figure 11 l'absence de champ électrique (12b), pour un champ électrique normale à la couche électroactive avec une tension de 20V (13b), de 40V (14b), de 70V (15b), de 120V (16b), et retour à OV (17b)

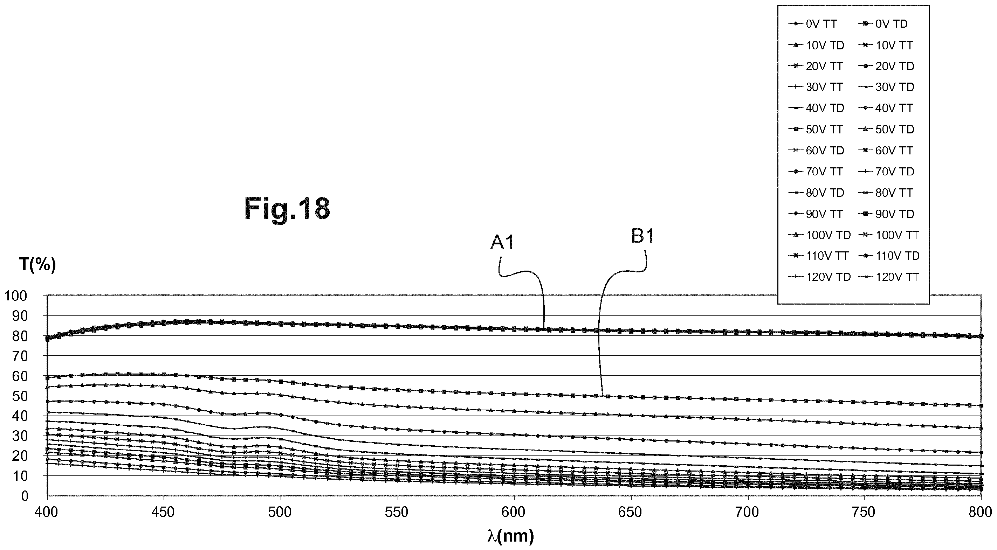

- la figure 18 montre un ensemble A1 de courbes correspondant à la transmission totale en fonction de la longueur d'onde entre 400 et 800nm environ sans champ électrique ou sous champ électrique normal à la couche électroactive avec une tension de 10V à 120V par pas de 10V pour le dispositif de la figure 11, et un ensemble de courbes B1 correspondant à la transmission diffuse en fonction de la longueur d'onde entre 400 et 2500nm environ sans champ électrique ou sous champ électrique normal à la couche électroactive avec une tension de 10V à 120V par pas de 10V, pour le dispositif de la figure11

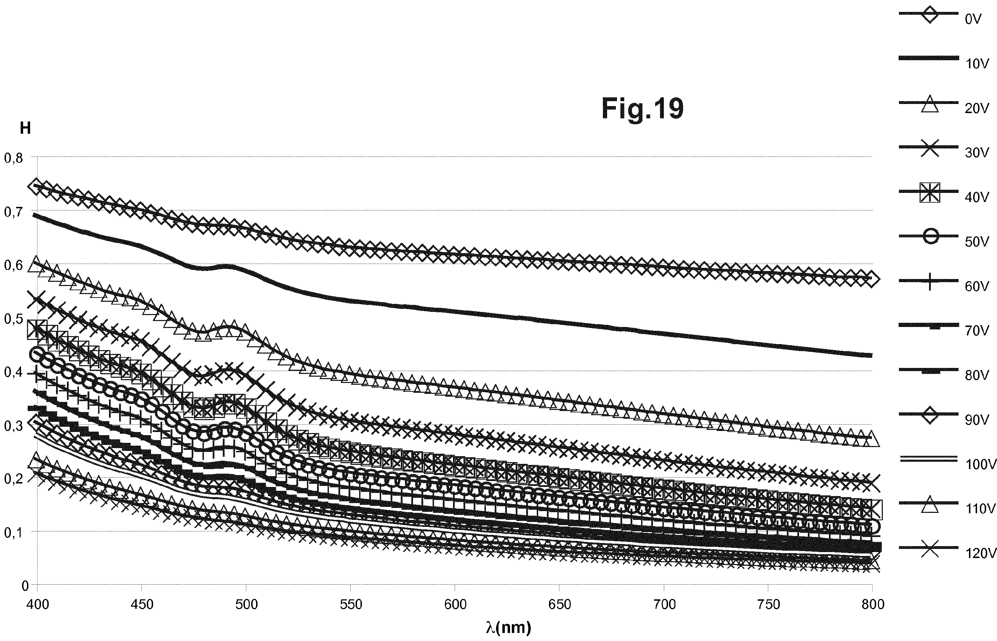

- la figure 19 montre un ensemble de courbes correspondant au flou H qui est le rapport entre la transmission diffuse TD et la transmission totale TT en fonction de la longueur d'onde entre 400 et 2500nm environ sans champ électrique ou sous champ électrique normal à la couche électroactive avec une tension de 10V à 120V par pas de 10V pour le dispositif de la figure11 et un ensemble de courbes B correspondant à la transmission diffuse en fonction de la longueur d'onde entre 400 et 2500nm environ sans champ électrique ou sous champ électrique normal à la couche électroactive avec une tension de 10V à 120V par pas de 10V pour le dispositif de la figure11

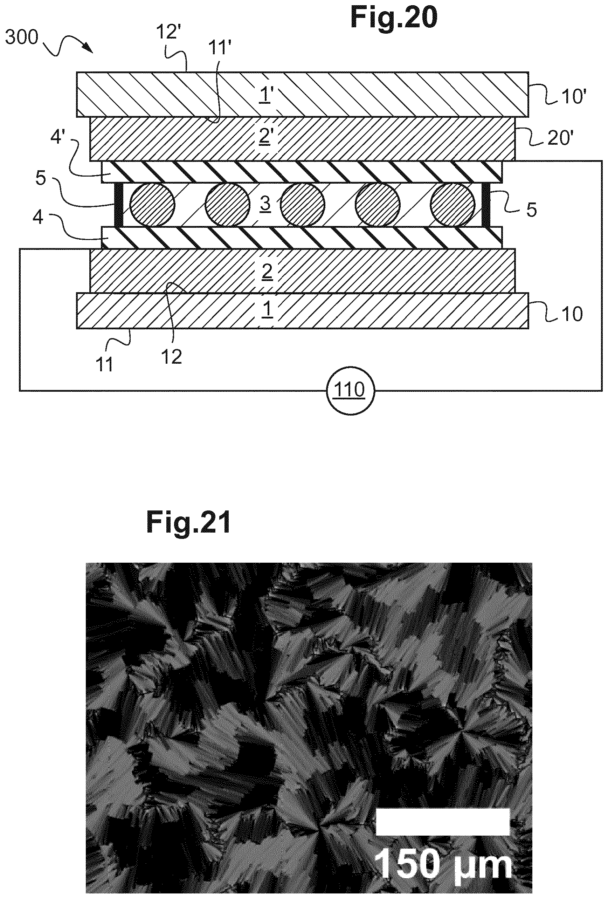

- la figure 20 représente une vue en coupe schématique d'un dispositif à diffusion variable par cristaux liquides 300 dans un troisiième mode de réalisation de l'invention
- la figure 21 montre une image (en noir et blanc) obtenue par microscopie optique en lumière polarisée (MOP) sous un grossissement de 20 (avec une échelle en trait blanc de 150µm image montrant les domaines à défauts lignes de type en éventail de la couche électroactive du dispositif électrocommandable de la figure 20 en l'absence de champ électrique

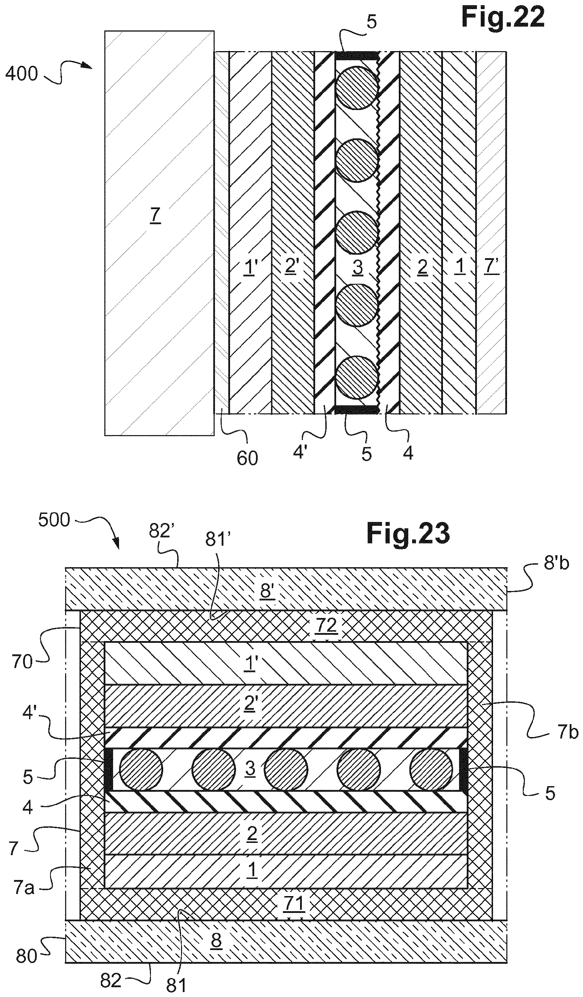

- la figure 22 représente une vue en coupe schématique d'un dispositif à diffusion variable par cristaux liquides 400 dans un quatrième mode de réalisation de l'invention
- la figure 22 représente une vue en coupe schématique d'un dispositif à diffusion variable par cristaux liquides 400 dans un quatrième mode de réalisation de l'invention
- la figure 23 représente une vue en coupe schématique d'un dispositif à diffusion variable par cristaux liquides 500 dans un cinquième mode de réalisation de l'invention
- les figures 24a et 24b représente respectivement une vue de face et en coupe schématique d'un dispositif à diffusion variable par cristaux liquides 600 dans un sixième mode de réalisation de l'invention
- la figure 25 représente une vue en coupe schématique d'un dispositif à diffusion variable par cristaux liquides 700 dans un septième mode de réalisation de l'invention.

Les éléments sur les figures ne sont pas représentés à l'échelle.

### EXEMPLE 1

L'exemple de réalisation n°1 représenté dans la figure 1 montre un dispositif électrocommandable à diffusion variable 100 par cristaux liquides selon l'invention qui comporte un empilement de couches dans cet ordre :
- un substrat diélectrique transparent 1 avec une tranche 10 et des faces principales 11 et 12 et comportant une première électrode transparente 2 avec une première surface principale dite surface de liaison et une surface dite surface Sb opposée et une tranche 10, ici un verre de 1,1mm -ou en variante plastique comme du PET- avec une couche d'ITO de résistance carré 10ohm/carré, plus largement entre 5 et 300ohm/carré et pour une neutralité en couleurs, cette électrode ou chaque électrode peut comprendre aussi au moins deux sous-couches minces diélectriques sous la couche ITO et même une ou deux surcouches (diélectriques)
- une première couche d'ancrage planaire 4 transparente (ici dégénéré) sur la première électrode 2
- en contact avec la première couche d'ancrage 4, une couche électroactive diélectrique 3 avec une face principale dite face côté surface de liaison et une face principale dite face A2 opposée, ici d'épaisseur de 6µm en une matière comportant
   - des cristaux liquides
   - des polymères formant un réseau polymérique, les cristaux liquides étant stabilisés par le réseau polymérique,
      la matière présentant à partir d'une température dite T1, une mésophase dite P dans laquelle la matière comporte un ensemble de domaines **ici submillimétriques** qui comportent des défauts topologiques bidimensionnels comme des défauts lignes
- des espaceurs étant répartis dans la matière ici des billes de verres
- la couche étant scellée en périphérie par un joint polymérique 5 par exemple en époxy en acrylate ici en cyanoacrylate
- une deuxième couche d'ancrage 4' transparente, ici ancrage normal
- une deuxième électrode transparente 2' avec côté face A2 une surface principale dite deuxième surface de liaison et avec une surface dite surface Sc opposée, notamment deuxième électrode qui est une couche d'ITO de résistance carré 10ohm/carré, plus largement entre 5 et 300ohm/carré et pour une neutralité en couleurs, cette ou chaque électrode peut comprendre aussi au moins deux sous-couches minces diélectriques sous la couche ITO et même une ou deux surcouches
- un support diélectrique transparent1' de la deuxième électrode 2' avec une tranche 10' et des faces principales 11' et 12', ici un verre de 1,1mm -ou en variante plastique comme du PET-

Pour l'alimentation électrique via une source 110, des rubans conducteurs (non montrés), notamment métalliques par exemple en cuivre sont fixés par exemple par collage le long et sur des bords périphériques et sont en contact avec les électrodes 2, 2' (un ruban par électrode, les rubans étant de préférence sur des bords opposés). Ces rubans sont ensuite reliés à une alimentation électrique

Les tranches 20,20' des électrodes 2,2' et le chant de la couche électroactive sont de préférence en retrait par rapport aux chants 10,10' des verres 1,1'.

Les verres 1,1' sont rectangulaires mais peuvent être de toute forme, par exemple rond, carré, et de toute dimension, par exemple de longueur d'au moins 1m et même de largeur d'au moins 10cm (bande etc). Les épaisseurs peuvent être par exemple de 0,7mm à 4mm. Ils peuvent être d'épaisseur de préférence supérieure à 100µm et d'au plus 300µm pour une meilleure tenue mécanique de l'ensemble et/ou une facilité de mise en œuvre, de manipulation mais si on veut plus de flexibilité, on peut descendre par exemple jusqu'à 50µm.

A l'état « OFF », c'est-à-dire avant l'application d'une tension électrique, ce vitrage à cristaux liquides 100 est diffusant, c'est-à-dire qu'il transmet optiquement mais n'est pas transparent. Dès qu'une tension est appliquée entre les deux électrodes, la couche 3 passe à l'état moins diffusant avec un niveau de diffusion variable qui dépend de la tension.

Sous ledit champ électrique, l'empilement présente une transmission diffuse et un flou qui varie avec la tension ici entre 5V et 120V.

Dans une alternative au choix de l'ITO seule ou dans une multicouche ou choisit un empilement à l'argent pour l'une ou les deux électrodes. On peut même choisir pour l'une des électrodes une couche avec une TL moins élevée ou même une couche réfléchissante.

L'une ou les faces externes des premier et deuxième substrats porteurs 1,1' peuvent comporter une ou des couches fonctionnelles (anti reflet etc) déjà connues.

L'un des premiers et deuxièmes substrats porteurs 1,1', et même l'électrode associée, peut être de plus grande dimension que le reste de l'empilement. Par exemple la couche électroconductrice 2 ou 2' telle que l'ITO (ou autre) peut servir couche de contrôle solaire. La zone ITO servant d'électrode peut alors être isolée par gravure laser par exemple pour former une bande d'ITO.

L'un et/ou l'autre des verres 1,1' peut être remplacé par une feuille polymérique par exemple PET d'au plus 500µm ou 200µm avec ou sans couche sur sa face externe ou encore par une feuille plastique -avec ou sans couche sur sa face externe- par exemple plus épaisse (tel que de 1 à 10mm) un polycarbonate ou encore un PMMA.

Le procédé de fabrication de l'exemple n°1 est décrit plus précisément ci-après.

La première couche d'ancrage 4 est une couche de poly(alcool vinylique) (PVOH; Sigma-Aldrich; poids moléculaire M_{w} ~ 27 kDa) de 300nm environ induisant un ancrage planaire (dégénéré) des cristaux liquides en surface (hors champ),

La couche de PVOH est déposée sur la première couche d'ITO 2 par 'spin coating' d'une solution de PVOH dans de l'eau desionisée (9,1% en poids). Avant le dépôt l'ITO est nettoyé à l'éthanol et séché sous azote.

La deuxième couche d'ancrage 4' est une couche d'octyltrichlorosilane (OTS) induisant un ancrage normal (homéotropique) des cristaux liquides en surface (hors champ). Elle est obtenue par immersion du verre avec le deuxième ITO 2' dans une solution d'OTS dans du n-heptane pendant 30 minutes, rinçage à l'eau desionisée et séchage sous azote.

Pour réaliser la couche électroactive 3 on forme un mélange avec deux types de cristaux liquides 5CB et 8CB, un monomère et un photoinitiateur.

Le mélange contient :
- 98% en poids des cristaux liquides 5CB et 8CB dans un ratio 1:4
- 2% en poids de l'ensemble formé par le monomère diméthacrylate de bisphénol A avec un photoinitiateur 2,2-diméthoxy-2-phénylacétophénon.

Le mélange présente une mésophase smectique A sous 17,5°C et une mésophase nématique entre 17,5°C et 38°C (et une phase isotropique au-delà).

On forme une couche de ce mélange entre les couches d'ancrages 4 et 4'.

Ensuite, l'ensemble est illuminé sous UV (λ = 365 nm) pour polymérisation à 5°C (ou au moins sous 17,5°C, donc en phase smectique A.

La couche électroactive 3 comporte alors en phase nématique des domaines qui sont assimilables aux domaines coniques focaux des phases smectiques A en particulier ici toriques ou TFCD.

Les figures 2a et 2c représentent une vue en coupe schématique et de détail une couche électroactive du dispositif à diffusion variable par cristaux liquides du type de la figure 1 hors champ électrique ou sous champ électrique, la figure 2b illustrant simplement l'orientation des certains cristaux liquides sous champ électrique.

La couche 3 en phase nématique présente des défauts smectiques de type TFCD.

On considère que la figure 2a représente un seul domaine focal conique de type TFCD.

Les figures 2a et 2c montrent une structure en couches 33 de cristaux liquides 31, 31a, 31b, 310 imposé par le réseau polymérique non représenté.

Les couches sont courbées en direction de la couche d'ancrage planaire (ici dégénéré) dans une zone centrale 34 et les couches sont planes et parallèles entre elles sur deux zones latérales 35, 35' plus ou moins étendues et qui peuvent être inexistantes.

Le domaine présente un défaut ligne dans le plan du verre 1 comme une surface avec un contour fermé de type circulaire (plus ou moins irrégulier) et un autre défaut ligne qui a une géométrie linéaire 36.

Du côté de la couche d'ancrage planaire (partie inférieure), certains cristaux liquides (des bâtonnets) 31a sont parallèles à cette couche suivant toutes les directions du plan).

Du côté de la couche d'ancrage normale (partie supérieure), certains cristaux liquides 31b sont perpendiculaires à cette couche.

Hors zone de contact avec la couche d'ancrage planaire 4, hors champ électrique par exemple au milieu de l'épaisseur de la couche 3 les cristaux liquides 310 ont une orientation normale aux couches 4 et 4'.

Par exemple les cristaux liquides ont une première orientation suivante un angle oblique par rapport à l'axe Z (au champ E vertical) hors champ électrique dans la zone courbée puis se rapprochant de l'axe Z (du champ E ) quand on applique le champ (cf figure 2b) par exemple 25V.

La figure 2c montre le cas ou (quasi) tous les cristaux liquides sont alignés verticalement par exemple à partir de 120V voire 150V.

Les figures 3a à 7a montrent des images (en noir et blanc) du dispositif électrocommandable de la figure 1 dans une cabine de lumière avec une trame de fond 110 (papier avec des lignes d'écritures) à 20cm et sous illuminant D65 en l'absence de champ électrique (3a), pour un champ électrique normal à la couche électroactive 3 avec une tension de 25V (4a), de 50V (5a), de 70V (6a), et retour à 0V (7a). La température est de 21°C donc en phase nématique avec des défauts smectiques A.

Les figures 3b à 7b montrent des images (en noir et blanc) obtenue par microscopie optique en lumière polarisée (MOP) sous un grossissement de 20 (avec une échelle en trait blanc de 50µm) images montrant les domaines à défauts lignes de la couche électroactive 3 du dispositif électrocommandable de la figure 1 en l'absence de champ électrique (3b), pour un champ électrique normal à la couche électroactive 3 avec une tension de 25V (4b), de 50V (5b), de 70V (6b), et retour à 0V (7b). La température est de 21°C.

Les domaines sont caractérisés par microscopie optique en lumière polarisée dite MOP, sur l'image dudit MOP, chaque domaine étant défini par une surface dite surface apparente SD.

Les domaines sont de surface SD polydisperse (contours plus visibles sous champ à faible tension par exemple à 25V).

On compte 1104 défauts dans un rectangle de 324 µm de long et 167 µm de large soit 1922 domaines.mm²

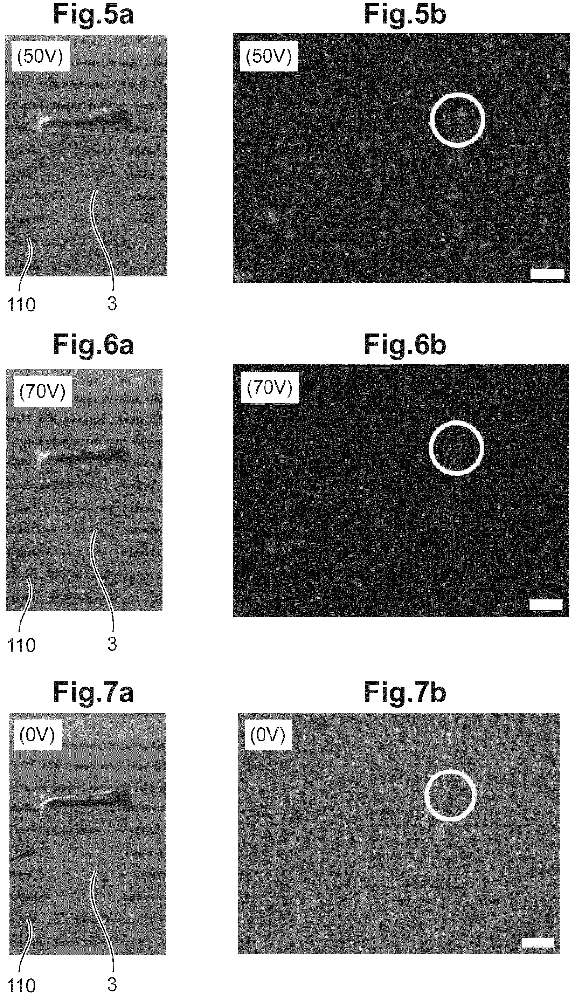

Les figures 7a et 7b témoignent de la réversibilité de l'état le plus transparent à l'état le plus diffusant (hors champ électrique).

Plus on augmente la tension mieux on distingue l'écriture de la trame 110.

La figure 8 montre :
- un ensemble A de courbes correspondant à la transmission totale TT en fonction de la longueur d'onde entre 400 et 800nm sans champ électrique ou sous champ électrique normal à la couche électroactive avec une tension de 10V à 110V par pas de 10V pour le dispositif de la figure 1
- et un ensemble de courbes B correspondant à la transmission diffuse TD en fonction de la longueur d'onde entre 400 et 800nm sans champ électrique ou sous champ électrique normal à la couche électroactive avec une tension de 10V à 110V par pas de 10V pour le dispositif de la figure 1.

L'empilement présente ici une transmission totale TT d'au moins 70% de 450 à 800nm (et même à 75% de 450nm a 600nm), avec un écart entre la transmission totale maximale et la transmission totale minimale TTmax - TTmin d'au plus 5% de 450 à 600nm.

La transmission totale TT reste assez constante même avec un champ électrique ( et pour tout niveau de tension).

La transmission totale TT sur la gamme de longueur d'onde 400-2500mn est (quasiment) indépendante de la tension de commutation.

On peut réduire l'absorption notamment causée par les couches d'ITO.

En revanche, on observe bel et bien que la transmission diffuse TD (courbes B) varie et diminue progressivement au fur et à mesure que la tension augmente pour chaque longueur d'onde. Donc on montre bien quantitativement que la transmission diffuse est ajustable avec la tension. Par exemple TD passe d'environ 10% à 55% à 600nm en passant de 120V à 0V.

La figure 9 montre les mêmes courbes que la figure 8 mais jusqu'à 2500nm.

La transmission totale TT reste assez constante même avec un champ électrique (tout niveau de tension) entre 800nm et 1500nm.

La transmission totale TT sur la gamme de longueur d'onde 400-2500mn est (quasiment) indépendante de la tension de commutation.

En revanche, on observe encore que la transmission diffuse TD (courbes B) varie et diminue progressivement au fur et à mesure que la tension augmente.

La figure 10 montre un ensemble de courbes correspondant au flou H ( exprimé en %) qui est le rapport entre la transmission diffuse TD et la transmission totale TT en fonction de la longueur d'onde entre 400 et 2500nm environ sans champ électrique ou sous champ électrique normal à la couche électroactive avec une tension de 10V à 120V par pas de 10V et un ensemble de courbes B correspondant à la transmission diffuse en fonction de la longueur d'onde entre 400 et 2500nm environ sans champ électrique ou sous champ électrique normal à la couche électroactive avec une tension de 10V à 120V par pas de 10V pour le dispositif de la figure 1.

### EXEMPLE 2

La figure 11 représente une vue en coupe schématique d'un dispositif à diffusion variable par cristaux liquides 200 dans un deuxième mode de réalisation de l'invention qui diffère du premier mode 100 en ce que la première couche d'ancrage planaire PVOH 4 est brossée avec du velours pour un ancrage planaire directionnel.

Les défauts lignes sont alors dits non TFCD ou square TFCD.

Les figures 12a à 17a montrent des images en noir et blanc du dispositif électrocommandable de la figure 11 dans une cabine de lumière avec une trame de fond 110 (papier avec des lignes d'écritures) à 20cm et sous illuminant D65 en l'absence de champ électrique (12a), pour un champ électrique normale à la couche électroactive avec une tension de 20V (13a), de 40V (14a), de 70V (15a), de 120V (16a), et retour à 0V (17a).

Les figures 12b à 17b montrent les images (en noir et blanc) obtenues par microscopie optique en lumière polarisée (MOP) sous un grossissement de 20 (avec une échelle en trait blanc de 50µm) images montrant les domaines à défauts lignes de la couche électroactive du dispositif électrocommandable de la figure 11 l'absence de champ électrique (12b), pour un champ électrique normale à la couche électroactive avec une tension de 20V (13b), de 40V (14b), de 70V (15b), de 120V (16b), et retour à 0V (17b).

Les domaines sont arrangés plus régulièrement que pour l'exemple 1 et moins polydisperses.

Les analyses sur l'influence du champ appliqué sur la diffusion, la transmission diffuse la transmission totale et sont analogues à celles de l'exemple 1.

On compte 2400 domaines par mm².

La figure 18 montre :
- un ensemble A1 de courbes correspondant à la transmission totale en fonction de la longueur d'onde entre 400 et 800nm environ sans champ électrique ou sous champ électrique normal à la couche électroactive avec une tension de 10V à 120V par pas de 10V pour le dispositif de la figure 11,
- et un ensemble de courbes B1 correspondant à la transmission diffuse en fonction de la longueur d'onde entre 400 et 800nm environ sans champ électrique ou sous champ électrique normal à la couche électroactive avec une tension de 10V à 120V par pas de 10V, pour le dispositif de la figure11.

L'allure des courbes similaires à celles de la figure 18.

La figure 19 montre :
- un ensemble de courbes correspondant au flou H qui est le rapport entre la transmission diffuse TD et la transmission totale TT en fonction de la longueur d'onde entre 400 et 2500nm environ sans champ électrique ou sous champ électrique normal à la couche électroactive avec une tension de 10V à 120V par pas de 10V pour le dispositif de la figure11
- et un ensemble de courbes B correspondant à la transmission diffuse en fonction de la longueur d'onde entre 400 et 2500nm environ sans champ électrique ou sous champ électrique normal à la couche électroactive avec une tension de 10V à 120V par pas de 10V pour le dispositif de la figure 11.

Les analyses sur l'influence du champ appliqué sur la diffusion, la transmission diffuse la transmission totale et sont analogues à celles de l'exemple 1.

### EXEMPLE 3

La figure 20 représente une vue en coupe schématique d'un dispositif à diffusion variable par cristaux liquides 300 dans un troisième mode de réalisation de l'invention qui diffère du premier mode 100 en ce que la deuxième couche d'ancrage devient une couche d'ancrage planaire 4'(dégénéré) et ici est identique à la première couche d'ancrage planaire 'PVOH.

La figure 21 montre une image (en noir et blanc) obtenue par microscopie optique en lumière polarisée (MOP) sous un grossissement de 20 (avec une échelle en trait blanc de 150µm image montrant les domaines à défauts lignes de type en éventail de la couche électroactive du dispositif électrocommandable de la figure 20 en l'absence de champ électrique.

Les défauts lignes sont de type fan shaped FCD.

### EXEMPLES D'ASSEMBLAGE

La figure 22 représente une vue en coupe schématique d'un dispositif à diffusion variable par cristaux liquides 400 dans un quatrième mode de réalisation de l'invention qui diffère du premier mode 100 en ce que :
- les verres 1 et 1' sont remplacés par des PET 1,1'
- et l'empilement est collé par une colle optique 60 à un élément 7 comme un verre 7 ou plastique rigide par exemple.

Par exemple il s'agit d'une cloison (position verticale).

L'ensemble peut faire partie d'un vitrage multiple (double ou triple vitrage).

Pour un double vitrage, l'empilement peut être coté face 1 (face extérieure), 2, 3; 4 (face intérieure).

L'empilement du dispositif 400 peut être flexible, s'adapter aux courbures de l'élément rapporté 7.

Pour un triple, l'empilement peut être coté face 1 (face extérieure), 2 , 3; 4 , 5 , 6 (face extérieure).

L'élément 7 peut être de même dimension ou de plus grande taille que l'empilement.

L'empilement peut être :
- sur la face de préférence externe d'une paroi de douche,
- sur la face de préférence interne (face 'F4') d'un vitrage bombé de véhicule notamment automobile: toit, vitrage latéral, pare-brise, lunette.

En particulier le dispositif 400 peut servir d'écran de projection.

La figure 23 représente une vue en coupe schématique d'un dispositif à diffusion variable par cristaux liquides 500 dans un cinquième mode de réalisation de l'invention qui comporte le premier dispositif 100 (verres 1, 1' éventuellement remplacés par des films de PET par exemple ) dans un vitrage feuilleté c'est-à-dire dans un intercalaire de feuilletage 7 par exemple PVB ou EVA submillémétrique ou d'au plus 2mm entre un premier et un deuxième vitrage 8,8' par exemple de forme générale rectangulaire (ou plus largement quadrilatère, polygonale) de dimensions identiques ou similaires par exemple d'épaisseur d'au plus 5mm ou 3mm avec des faces principales internes 81,81' côté intercalaire et externes 82,82'.

Lors de la fabrication on peut utiliser trois feuillets d'intercalaire : deux feuillets pleins 71, 72 contre les faces internes 81, 81' des vitrages 8, 8' et un feuillet central avec une ouverture pour loger l'empilement de la figure 1. Apres feuilletage l'interface entre feuillets (symbolisé en pointillés) n'est pas forcément discernable. On préfère que l'ouverture soit fermée plutôt que totalement débouchante sur un côté. Ainsi tout le chant de l'empilement est entouré d'intercalaire de feuilletage 7. Naturellement pour l'alimentation électrique, de la connectique peut sortir du dispositif 500 et même dépasser sur un ou plusieurs côtés des chants des vitrages.

Alternativement, on peut utiliser deux feuillets d'intercalaires 71, 72 le feuillet central évidé n'étant pas nécessaire si l'empilement est suffisamment mince par exemple d'épaisseur d'au plus 0,2mm.

Un premier vitrage 8 ou 8' peut être teinté (gris, vert, bronze etc) et l'autre vitrage clair ou extraclair 8' ou 8. Un premier feuillet intercalaire peut être teinté (gris, vert, bronze etc) et le ou les autres clair ou extraclair. L'un des premiers vitrages 8 ou 8' peut être remplacé par une feuille plastique comme un polycarbonate ou un PMMA (notamment avec un intercalaire de feuilletage en PU).

Le chant 70 de l'intercalaire de feuilletage peut être en retrait (d'au plus 5mm par exemple) du chant 80, 80' des vitrages 8,8'.

Le dispositif 500 couvre la quasi-totalité des faces principales des verres 8 et même ici est centré. Il y a la même largeur de PVB 7a, 7b de part et d'autre du dispositif 200.

Les vitrages 8, 8' sont plans ou bombés, le dispositif 500 pouvant s'adapter à la ou aux courbures des vitrages.

Le dispositif 500 peut être une cloison ou encore un toit de véhicule. Par exemple pour un toit automobile:
- le vitrage 8 est le vitrage extérieur bombé, qui est un vitrage teinté de 3mm
- le vitrage 8' est le vitrage intérieur bombé, qui est un vitrage clair de 3mm ou plus mince
- l'intercalaire de feuilletage 8 est en PVB qui peut être acoustique notamment bicouche ou tricouche (feuillet 71 ou 72).

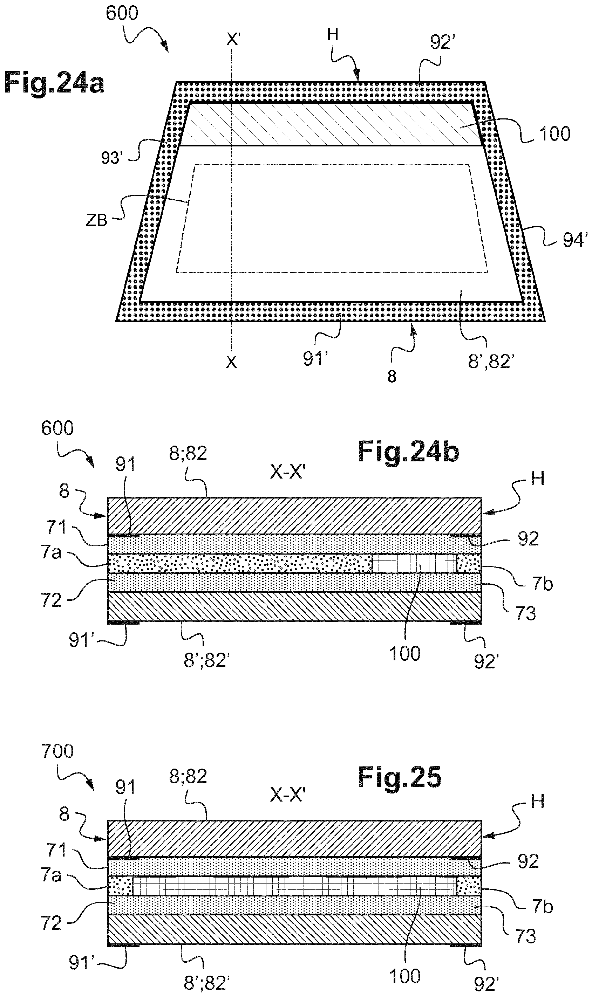

Les figures 24a et 24b représente respectivement une vue de face et en coupe schématique d'un dispositif à diffusion variable par cristaux liquides 600 dans un sixième mode de réalisation de l'invention.

Le dispositif 600 diffère du dispositif 600 en ce que l'empilement de la figure 1 100 couvre une portion de surface, en particulier une bande périphérique par exemple le long d'un bord longitudinal H supérieur d'un pare-brise de véhicule automobile (vitrage feuilleté bombé avec le dispositif 100), sur quasi toute la longueur du pare-brise.

Cette bande 100 est dans une zone marginale dans laquelle les critères de TL et d'absence de flou sont plus libres que dans la zone centrale ZB.

Comme montré en figure 24b (vue de coupe), la largeur 7a d'intercalaire central 73 entre le dispositif 200 et le bord longitudinal inférieur B est plus grande que la largeur 7b d'intercalaire central 73 entre le dispositif 600 et le bord longitudinal supérieur H.

En variante ou cumulativement, elle peut être présente le long d'un bord longitudinal B inférieur du pare-brise, sur toute la longueur ou une portion de longueur.

Comme montré en figure 24a (vue de face côté intérieur du véhicule), le pare-brise comprend un premier cadre opaque par exemple en émail (noir ou autre) 91' à 94' sur les bords latéraux et longitudinaux de la face libre (F4) 82' du vitrage interne 8' et un deuxième cadre opaque par exemple en émail (noir ou autre) 91 à 94 sur les bords latéraux et longitudinaux de la face libre (F1) 82 du vitrage externe 8.

La tranche du dispositif 600 qui est coté bord longitudinal inférieur, et même celles côté bords latéraux peut être (en face de) entre les couches 92, 92', 93, 93', 94, 94' des cadres émail. Par exemple les connectiques et autres bandes d'amenée de courant peuvent être également masquées par ces couches 92, 92', 93, 93', 94, 94'.

La figure 25 représente une vue en coupe schématique d'un dispositif à diffusion variable par cristaux liquides 700 dans un septième mode de réalisation de l'invention qui diffère du dernier mode 600 en ce qu'il s'agit d'un toit automobile par exemple avec le verre externe 8 est teinté et/ou le PVB 71 est teinté et le dispositif 100 couvre sensiblement toute la face principale des verres 8,8'.

## Revendications

1. Dispositif électrocommandable à diffusion variable par cristaux liquides (100, 200, 300, 400, 500, 600, 700) comportant un empilement de couches dans cet ordre :
- une première électrode (2) notamment sur un substrat diélectrique, première électrode avec une première surface principale dite surface de liaison et une surface dite surface Sb opposée
- une couche électroactive diélectrique (3) avec une face principale dite face côté surface de liaison et une face principale dite face A2 opposée, en une matière comportant :
- des cristaux liquides
- des polymères formant un réseau polymérique, les cristaux liquides étant stabilisés par le réseau polymérique,
- une deuxième électrode (2') avec côté face A2 une surface principale dite deuxième surface de liaison et avec une surface dite surface Sc opposée, notamment deuxième électrode sur un support diélectrique
la couche électroactive étant visible par transparence côté première électrode et/ou côté deuxième électrode,
**caractérisé en ce que** la matière présente à partir d'une température dite T1, une mésophase dite P dans laquelle la matière comporte un ensemble de domaines notamment subcentimétriques qui comportent des défauts topologiques bidimensionnels,
et ce qu'à une température T' supérieure ou égale à T1, l'empilement présente au moins trois états de diffusion pour au moins une longueur d'onde dans la gamme du visible,
le premier état étant le plus diffusant,
le deuxième état étant diffusant et moins diffusant que le premier état
et le troisième état étant transparent ou diffusant et moins diffusant que le deuxième état,
les trois états étant commutables,
au moins deux des trois états étant obtenus par l'application d'un- champ électrique entre les première et deuxième électrodes
la matière présentant une autre mésophase P' à une température inférieure à T1, la mésophase P est plus éloignée de la phase cristalline que la mésophase P', lesdits domaines de la mésophase P sont des domaines subsistant de la mésophase P'.

2. Dispositif électrocommandable à diffusion variable par cristaux liquides selon l'une des revendications précédentes **caractérisé en ce que** le premier état est accessible en l'absence dudit champ électrique appliqué, les deuxième et troisième états sont accessibles en présence dudit champ électrique appliqué, le deuxième état étant obtenu pour une tension V1 et le troisième état étant obtenu pour une tension V2 supérieure à V1.

3. Dispositif électrocommandable à diffusion variable par cristaux liquides selon l'une des revendications précédentes **caractérisé en ce que** sous ledit champ électrique et à T', l'empilement présente une transmission diffuse et/ou un flou qui varie avec la tension dans tout ou partie entre 5 et 120V.

4. Dispositif électrocommandable à diffusion variable par cristaux liquides selon l'une des revendications précédentes **caractérisé en ce que** l'empilement présente une transmission totale TT mesurée avec une sphère intégrante sans champ électrique d'au moins 5% à 550nm et même de 400 à 600nm, avec un écart entre la transmission totale maximale et la transmission totale minimale TTmax - TTmin d'au plus 5% de 400 à 600nm et **en ce que** la transmission totale TT' sous ledit champ électrique, notamment pour une tension électrique entre 5 et 120V,est telle que TT'-TT (en valeur absolue) est inférieure à 2% à 550nm et même de 400 à 600nm et même un écart entre la transmission totale maximale sous champ TT'max et la transmission totale minimale TT'min d'au plus 5% de 400 à 600nm.

5. Dispositif électrocommandable à diffusion variable par cristaux liquides selon l'une des revendications précédentes **caractérisé en ce que** la mésophase P n'est pas smectique, en particulier est nématique.

6. Dispositif électrocommandable à diffusion variable par cristaux liquides selon l'une des revendications précédentes **caractérisé en ce que** la mésophase P présente un ordre de position en moins que la mésophase P' de la matière, P' notamment n'est pas nématique, en particulier les cristaux liquides sont en moyenne parallèles entre eux c'est-à-dire avec au moins un ordre d'orientation spontanée à longue portée.

7. Dispositif électrocommandable à diffusion variable par cristaux liquides selon l'une des revendications précédentes **caractérisé en ce que** la mésophase P est nématique éventuellement torsadée.

8. Dispositif électrocommandable à diffusion variable par cristaux liquides selon l'une des revendications précédentes **caractérisé en ce que** les défauts sont figés par le réseau polymérique.

9. Dispositif électrocommandable à diffusion variable par cristaux liquides selon l'une des revendications précédentes **caractérisé en ce que** la phase P' n'est pas nématique, notamment la phase P' est smectique et lesdits défauts de la mésophase P' sont des défauts smectiques.

10. Dispositif électrocommandable à diffusion variable par cristaux liquides selon l'une des revendications précédentes caractérisé en ce la phase P est nématique.

11. Dispositif électrocommandable à diffusion variable par cristaux liquides selon l'une des revendications précédentes **caractérisé en ce que** à ladite température T', sans ledit champ électrique et/ou sous ledit champ électrique, les domaines sont **caractérisés par** microscopie optique en lumière polarisée dite MOP, sur l'image dudit MOP, chaque domaine étant défini par une surface dite surface apparente SD, la densité de domaines est d'au moins de 100 domaines/mm² ou même d'au moins 1000 domaines/mm² déterminé par le nombre de surfaces apparentes SD.

12. Dispositif électrocommandable à diffusion variable par cristaux liquides selon l'une des revendications précédentes **caractérisé en ce que** la mésophase P présente sensiblement une structure, notamment imposée par le réseau polymérique, des couches de cristaux liquides, en particulier les domaines présentant des zones de couches courbes de cristaux liquides et éventuellement des zones de couches de cristaux liquides planes.

13. Dispositif électrocommandable à diffusion variable par cristaux liquides selon l'une des revendications précédentes **caractérisé en ce que** les domaines sont assimilables à des domaines coniques focaux des phases smectiques en particulier toriques, non toriques, paraboliques, hémicylindriques, en éventail.

14. Dispositif électrocommandable à diffusion variable par cristaux liquides selon l'une des revendications précédentes **caractérisé en ce que** les défauts sont des défauts lignes choisis parmi un contour fermé régulier ou irrégulier, comme un cercle, une ellipse, un carré ou rectangle ou une géométrie linéaire, elliptique, parabolique, hyperbolique et en particulier la couche comporte un premier type de défauts et un deuxième type de défauts.

15. Dispositif électrocommandable à diffusion variable par cristaux liquides selon l'une des revendications précédentes **caractérisé en ce qu'**il comporte :
- en contact avec la face A1, une première couche d'ancrage de surface des cristaux liquides, apte à ancrer au moins une fraction des cristaux liquides en contact de cette première couche d'ancrage selon une première orientation de préférence planaire en l'absence dudit champ électrique appliqué, première couche d'ancrage de préférence transparente éventuellement teintée notamment d'épaisseur E₁ d'au plus micrométrique et même submicrométrique
- en contact avec la face A2 une deuxième couche d'ancrage de surface, notamment normal ou planaire dégénéré, apte à orienter une fraction des cristaux liquides en contact de cette deuxième couche d'ancrage selon une deuxième orientation, notamment similaire ou distincte de la première orientation, en l'absence dudit champ électrique appliqué, deuxième couche d'ancrage de préférence transparente éventuellement teintée d'épaisseur E'₁ d'au plus micrométrique et même submicrométrique.

16. Dispositif électrocommandable à diffusion variable par cristaux liquides selon la revendication précédente **caractérisé en ce que** la première couche d'ancrage est un ancrage planaire unidirectionnel ou dégénéré et la deuxième couche d'ancrage est un ancrage normal ou planaire dégénéré ou la première couche d'ancrage est une couche diélectrique notamment polymérique et/ou la deuxième couche d'ancrage est une couche diélectrique notamment polymérique ou une lame d'air/de gaz.

17. Dispositif électrocommandable à diffusion variable par cristaux liquides selon l'une des revendications 1 à 16 **caractérisé en ce que** le substrat diélectrique (1) est transparent, côté surface Sb et porteur de la première électrode qui est transparente et choisi parmi une feuille de verre ou une feuille polymérique transparente avec une éventuelle couche anti-rayures et/ou le support diélectrique (1') est transparent, côté surface Sc et porteur de la deuxième électrode qui est transparente et choisi parmi une feuille de verre ou une feuille polymérique transparente avec une éventuelle couche anti-rayures.

18. Dispositif électrocommandable à diffusion variable par cristaux liquides selon l'une des revendications 1 à 17 **caractérisé en ce que** le substrat diélectrique (1) est transparent, côté surface Sb et porteur de la première électrode qui est transparente et comporte une première feuille de verre qui est coté surface Sb feuilletée via un intercalaire de feuilletage thermoplastique à une autre feuille de verre et/ou le support diélectrique (1') est transparent, côté surface Sc et porteur de la deuxième électrode qui est transparente et comporte une feuille de verre qui est coté surface Sc feuilletée via un intercalaire de feuilletage thermoplastique à une autre feuille de verre, occupant tout ou partie de la surface de la première feuille de verre, éventuellement teintée notamment bleu, vert, gris ou bronze, bombée et/ou trempée.

19. Dispositif électrocommandable à diffusion variable par cristaux liquides selon l'une des revendications précédentes **caractérisé en ce qu'**il comporte un vitrage feuilleté comportant :
- une première feuille de verre additionnelle (8), éventuellement teinté,
- un intercalaire de feuilletage thermoplastique notamment EVA ou PVB
- une deuxième feuille de verre additionnelle (8') ou une feuille de plastique
les faces principales internes dites F2 et F3 des première et deuxième feuilles de verre additionnelles étant en regard, l'empilement étant entre les faces F2 et F3 et de préférence dans l'intercalaire de feuilletage, notamment avec le substrat qui est polymérique et même le support qui est polymérique, occupant tout ou partie de la surface de la première feuille.

20. Dispositif électrocommandable à diffusion variable par cristaux liquides selon l'une des revendications précédentes **caractérisé en ce qu'**il comporte un vitrage notamment feuilleté et/ou bombé, et l'empilement forme une bande notamment périphérique sur une portion d'une face principale dudit vitrage.

21. Dispositif électrocommandable à diffusion variable par cristaux liquides selon l'une des revendications précédentes **caractérisé en ce qu'**il comporte un vitrage feuilleté et notamment bombé, et l'empilement est entre les premier et deuxième vitrages respectivement dits vitrages extérieur et intérieur et forme une bande périphérique sur une portion supérieure du vitrage feuilleté, la tranche dite externe de l'empilement étant masqué de l'extérieur par une première couche périphérique opaque sur le vitrage extérieur, et/ou la tranche dite interne de l'empilement étant masqué de l'intérieur par une deuxième couche périphérique opaque sur le vitrage intérieur.

22. Dispositif électrocommandable à diffusion variable par cristaux liquides selon l'une des revendications précédentes **caractérisé en ce que** le vitrage est feuilleté et/ou est bombé et est choisi parmi un vitrage d'un véhicule automobile ou ferroviaire ou maritime ou **en ce que** le vitrage est une porte vitrée, une façade ou vitrine, une cloison, une partie vitrée de meuble urbain ou domestique et/ou fait partie d'un double ou triple vitrage ou **en ce qu'**il est utilisé comme écran de projection ou rétroprojection et/ou, notamment dans un vitrage feuilleté, en combinaison avec un autre dispositif électrocommandable tel qu'un dispositif électrocommandable électroluminescent , en particulier, LED, OLED, TFEL.

23. Procédé de fabrication d'un dispositif électrocommandable à diffusion variable par cristaux liquides selon l'une des revendications précédentes et comportant les étapes suivantes :
- une fourniture d'une première électrode notamment sur un substrat diélectrique
une fourniture d'une deuxième électrode notamment sur un support diélectrique
- la fourniture d'un mélange comportant :
- au moins un précurseur de polymère
- des cristaux liquides incluant au moins des premiers cristaux liquides présentant une mésophase P et éventuellement au moins des deuxièmes cristaux liquides
le mélange présentant la mésophase P et une mésophase P', TA étant la température de transition entre la mésophase P et la mésophase P' du mélange
- si nécessaire un amorceur de polymérisation, de préférence un photo amorceur
- la formation d'un empilement de couches comportant entre les première et deuxième électrodes, la formation à partir dudit mélange d'une couche électroactive en une matière comportant lesdits cristaux liquides stabilisés par un réseau polymérique, ladite formation comportant :
- à la température Ti inférieure à TA, en mésophase P', la polymérisation de préférence par photopolymérisation de préférence sous ultraviolet ou UV du ou desdits précurseurs conduisant audit réseau polymérique
et en ce qu'il comprend, en mésophase P', la formation de domaines, notamment subcentimétriques, avec des défauts topologiques bidimensionnels, subsistant sensiblement en mésophase P.

24. Procédé de fabrication d'un dispositif électrocommandable à diffusion variable par cristaux liquides selon la revendication précédente **caractérisé en ce que** les premiers cristaux liquides présentant la mésophase P et la mésophase P', les premiers cristaux liquides ayant une température de transition Tp entre la mésophase P et la mésophase P', TA étant de préférence est inférieure ou égale à Tp, la polymérisation est à la température Ti inférieure à Tp ou TA.

25. Procédé de fabrication du dispositif électrocommandable à diffusion variable selon l'une des revendications précédentes de procédé caractérisé en ce la mésophase P est plus éloignée de la phase cristalline que la mésophase P', en particulier la mésophase P est nématique éventuellement torsadée.

26. Procédé de fabrication du dispositif électrocommandable à diffusion variable selon l'une des revendications précédentes de procédé **caractérisé en ce que** la mésophase P' n'est pas nématique et même smectique.

27. Procédé de fabrication du dispositif électrocommandable à diffusion variable l'une des revendications précédentes de procédé **caractérisé en ce que** la formation de domaines est effectuéee notamment par l'une des étapes suivantes:
- par la mise en contact dudit mélange avec des première et deuxième couches d'ancrage des cristaux liquides en surface
- par application de contraintes
- par application d'un champ électrique en particulier alternatif basse fréquence, d'au plus 100Hz, ou d'au plus 10Hz, le mélange comportant des particules chargées.

28. Procédé de fabrication du dispositif électrocommandable à diffusion variable selon l'une des revendications précédentes de procédé **caractérisé en ce que** la dite formation de la couche électroactive comprend la mise en contact dudit mélange avec des première et deuxième couches d'ancrage des cristaux liquides en surface en particulier :
- dépôt par voie liquide d'une couche, ou fourniture d'un élément comme un film submillimétrique lié à la première électrode
- dépôt par voie liquide d'une couche, ou fourniture d'un élément comme un film submillimétrique lié à la deuxième électrode ou création d'une lame de gaz comme une lame d'air entre la deuxième électrode et le mélange.

29. Procédé de fabrication du dispositif électrocommandable à diffusion variable selon l'une des revendications précédentes de procédé **caractérisé en ce que** les premiers cristaux liquides ont une mésophase P' qui est smectique notamment A et une mésophase nématique P et des deuxièmes cristaux liquides ont une mésophase notamment nématique et sont dénués de mésophase smectique.

30. Procédé de fabrication du dispositif électrocommandable à diffusion variable selon l'une des revendications précédentes de procédé **caractérisé en ce qu'**il comporte une étape de feuilletage dudit empilement entre deux feuilles de verre, notamment bombées, au moyen d'un intercalaire de feuilletage polymérique notamment thermoplastique par exemple PVB ou EVA, intercalaire de feuilletage comportant un ou plusieurs feuillets, notamment feuilletage à une température d'au plus 140°C et même d'au plus 120°C.

## Patentansprüche

1. Elektrisch steuerbare Vorrichtung mit variabler Diffusion durch Flüssigkristalle (100, 200, 300, 400, 500, 600, 700), die einen Stapel von Schichten in dieser Reihenfolge aufweist:
- eine erste Elektrode (2), insbesondere auf einem dielektrischen Substrat, wobei die erste Elektrode mit einer ersten Hauptoberfläche, genannt Verbindungsoberfläche, und einer Oberfläche, genannt gegenüberliegende Oberfläche Sb, versehen ist
- eine elektroaktive dielektrische Schicht (3) mit einer Hauptfläche, genannt Fläche, auf der Seite der Verbindungsoberfläche, und einer Hauptfläche, genannt gegenüberliegende Fläche A2, aus einem Material, das aufweist:
- Flüssigkristalle
- Polymere, die ein Polymernetzwerk ausbilden, wobei die Flüssigkristalle durch das Polymernetzwerk stabilisiert werden,
- eine zweite Elektrode (2') mit einer Hauptfläche, genannt zweite Verbindungsoberfläche, auf der Seite der Fläche A2 und mit einer Oberfläche, genannt gegenüberliegende Oberfläche Sc, wobei insbesondere die zweite Elektrode auf einem dielektrischen Träger liegt
wobei die elektroaktive Schicht durch Transparenz auf der Seite der ersten Elektrode und/oder der Seite der zweiten Elektrode sichtbar ist,
**dadurch gekennzeichnet, dass** das Material ab einer sogenannten Temperatur T1, eine sogenannte Mesophase P vorweist, in der das Material einen Satz von insbesondere subzentimetrischen Domänen aufweist, die zweidimensionale topologische Defekte aufweisen,
und **dass** bei einer Temperatur T' größer als oder gleich T1 der Stapel mindestens drei Diffusionszustände für mindestens eine Wellenlänge in dem sichtbaren Bereich vorweist,
der erste Zustand der am stärksten diffundierende ist,
der zweite Zustand diffundierend und weniger diffundierend als der erste Zustand ist und der dritte Zustand transparent oder diffundierend und weniger diffundierend als der zweite Zustand ist,
die drei Zustände umschaltbar sind,
mindestens zwei der drei Zustände durch Anlegen eines elektrischen Feldes zwischen der ersten und der zweiten Elektrode erhalten werden
das Material bei einer Temperatur niedriger als T1 eine andere Mesophase P' vorweist, die Mesophase P weiter entfernt von der kristallinen Phase als die Mesophase P' ist, die Domänen der Mesophase P weiterbestehende Domänen der Mesophase P' sind.

2. Elektrisch steuerbare Vorrichtung mit variabler Diffusion durch Flüssigkristalle nach einem der vorstehenden Ansprüche,
**dadurch gekennzeichnet, dass** der erste Zustand in Abwesenheit des angelegten elektrischen Feldes erreichbar ist, der zweite und der dritte Zustand in Gegenwart des angelegten elektrischen Feldes erreichbar sind, der zweite Zustand für eine Spannung V1 erhalten wird und der dritte Zustand für eine Spannung V1 erhalten wird, die größer als V1 ist.

3. Elektrisch steuerbare Vorrichtung mit variabler Diffusion durch Flüssigkristalle nach einem der vorstehenden Ansprüche,
**dadurch gekennzeichnet, dass** unter diesem elektrischen Feld und bei T' der Stapel eine diffundierende Transmission und/oder eine Unschärfe vorweist, die mit der Spannung insgesamt oder teilweise zwischen 5 und 120 V variiert.

4. Elektrisch steuerbare Vorrichtung mit variabler Diffusion durch Flüssigkristalle nach einem der vorstehenden Ansprüche,
**dadurch gekennzeichnet, ss** der Stapel eine Gesamttransmission TT, die mit einer Ulbricht-Kugel ohne elektrisches Feld gemessen wird, von mindestens 5 % bei 550 nm und sogar von 400 bis 600 nm mit einer Differenz zwischen der maximalen Gesamttransmission und der minimalen Gesamttransmission TTmax - TTmin von höchstens 5 % von 400 bis 600 nm vorweist, und **dass** die Gesamttransmission TT' unter dem elektrischen Feld, insbesondere für eine elektrische Spannung zwischen 5 und 120 V, so ist, dass TT'-TT (in absoluten Werten) kleiner als 2 % bei 550 nm und sogar von 400 bis 600 nm und sogar eine Abweichung zwischen der maximalen Gesamttransmission unter Feld TT'max und der minimalen Gesamttransmission TT'min von höchstens 5 % von 400 bis 600 nm ist.

5. Elektrisch steuerbare Vorrichtung mit variabler Diffusion durch Flüssigkristalle nach einem der vorstehenden Ansprüche,
**dadurch gekennzeichnet, dass** die Mesophase P nicht smektisch ist, im Besonderen nematisch ist.

6. Elektrisch steuerbare Vorrichtung mit variabler Diffusion durch Flüssigkristalle nach einem der vorstehenden Ansprüche,
**dadurch gekennzeichnet, dass** die Mesophase P eine niedrigere Positionsreihenfolge als die Mesophase P' des Materials vorweist, P' insbesondere nicht nematisch ist, im Besonderen die Flüssigkristalle durchschnittlich parallel zueinander sind, das heißt mit mindestens einer weitreichenden Reihenfolge einer spontanen Ausrichtung.

7. Elektrisch steuerbare Vorrichtung mit variabler Diffusion durch Flüssigkristalle nach einem der vorstehenden Ansprüche,
**dadurch gekennzeichnet, dass** die Mesophase P nematisch, optional verdreht ist.

8. Elektrisch steuerbare Vorrichtung mit variabler Diffusion durch Flüssigkristalle nach einem der vorstehenden Ansprüche,
**dadurch gekennzeichnet, dass** die Defekte durch das Polymernetzwerk festgelegt sind.

9. Elektrisch steuerbare Vorrichtung mit variabler Diffusion durch Flüssigkristalle nach einem der vorstehenden Ansprüche,
**dadurch gekennzeichnet, dass** die Phase P' nicht nematisch ist, insbesondere die Phase P' smektisch ist und die Defekte der Mesophase P' smektische Defekte sind.

10. Elektrisch steuerbare Vorrichtung mit variabler Diffusion durch Flüssigkristalle nach einem der vorstehenden Ansprüche,
**dadurch gekennzeichnet, dass** die Phase P nematisch ist.

11. Elektrisch steuerbare Vorrichtung mit variabler Diffusion durch Flüssigkristalle nach einem der vorstehenden Ansprüche,
**dadurch gekennzeichnet, dass** bei der Temperatur T', ohne das elektrische Feld und/oder unter dem elektrischen Feld, die Domänen durch optische Mikroskopie mit polarisiertem Licht, genannt MOP, auf dem Bild der MOP gekennzeichnet sind, wobei jede Domäne durch eine Oberfläche definiert wird, genannt freiliegende Oberfläche SD, die Domänendichte mindestens 100 Domänen/mm² oder sogar mindestens 1000 Domänen/mm² beträgt, die durch die Anzahl von freiliegenden Oberflächen SD bestimmt wird.

12. Elektrisch steuerbare Vorrichtung mit variabler Diffusion durch Flüssigkristalle nach einem der vorstehenden Ansprüche,
**dadurch gekennzeichnet, dass** die Mesophase P im Wesentlichen eine Struktur, die insbesondere durch das Polymernetzwerk vorgegeben wird, von Flüssigkristallschichten vorweist, im Besonderen der Domänen, die Zonen gekrümmter Flüssigkristallschichten und optional Zonen ebener Flüssigkristallschichten vorweisen.

13. Elektrisch steuerbare Vorrichtung mit variabler Diffusion durch Flüssigkristalle nach einem der vorstehenden Ansprüche,
**dadurch gekennzeichnet, dass** die Domänen an fokale konische Domänen der smektischen Phasen, im Besonderen torisch, nicht torisch, parabolisch, halbzylindrisch, fächerförmig anpassbar sind.

14. Elektrisch steuerbare Vorrichtung mit variabler Diffusion durch Flüssigkristalle nach einem der vorstehenden Ansprüche,
**dadurch gekennzeichnet, dass** die Defekte Linienfehler sind, die aus einer regelmäßigen oder unregelmäßigen geschlossenen Kontur, wie einem Kreis, einer Ellipse, einem Quadrat oder Rechteck oder einer linearen, elliptischen, parabolischen, hyperbolischen Geometrie ausgewählt werden, und im Besonderen die Schicht eine erste Art von Defekten und eine zweite Art von Defekten aufweist.

15. Elektrisch steuerbare Vorrichtung mit variabler Diffusion durch Flüssigkristalle nach einem der vorstehenden Ansprüche,
**dadurch gekennzeichnet, dass** sie aufweist:
- in Kontakt mit der Fläche A1, eine erste Oberflächenverankerungsschicht der Flüssigkristalle, die geeignet ist, um mindestens einen Teil der Flüssigkristalle in Kontakt mit dieser ersten Verankerungsschicht in einer ersten Ausrichtung zu verankern, vorzugsweise eben, in Abwesenheit des angelegten elektrischen Feldes, wobei die erste Verankerungsschicht, vorzugsweise transparent, optional getönt ist, insbesondere mit einer Dicke E₁, die höchstens mikrometrisch und sogar submikrometrisch ist
- in Kontakt mit der Fläche A2 eine zweite Oberflächenverankerungsschicht, insbesondere senkrecht oder degeneriert eben, die geeignet ist, um einen Teil der Flüssigkristalle, die mit dieser zweiten Verankerungsschicht in Kontakt stehen, in einer zweiten Ausrichtung auszurichten, die insbesondere der ersten Ausrichtung ähnlich ist oder sich von ihr unterscheidet, in Abwesenheit des angelegten elektrischen Feldes, wobei die zweite Verankerungsschicht vorzugsweise transparent, optional getönt ist, mit einer Dicke E'₁, die höchstens mikrometrisch und sogar submikrometrisch ist.

16. Elektrisch steuerbare Vorrichtung mit variabler Diffusion durch Flüssigkristalle nach dem vorstehenden Anspruch,
**dadurch gekennzeichnet, dass** die erste Verankerungsschicht eine unidirektionale oder degenerierte ebene Verankerung ist und die zweite Verankerungsschicht eine senkrechte oder degenerierte ebene Verankerung ist oder die erste Verankerungsschicht eine insbesondere polymere dielektrische Schicht ist und/oder die zweite Verankerungsschicht eine insbesondere polymere dielektrische Schicht oder ein Luft-/Gaszwischenraum ist.

17. Elektrisch steuerbare Vorrichtung mit variabler Diffusion durch Flüssigkristalle nach einem der Ansprüche 1 bis 16,
**dadurch gekennzeichnet, dass** das dielektrische Substrat (1) auf der Seite der Oberfläche SB transparent ist und die erste Elektrode trägt, die transparent ist, und aus einer Glasscheibe oder einer transparenten Polymerscheibe mit einer optionalen Kratzschutzschicht ausgewählt ist und/oder der dielektrische Träger (1') auf der Seite der Oberfläche Sc transparent ist und die zweite Elektrode trägt, die transparent ist, und aus einer Glasscheibe oder einer transparenten Polymerscheibe mit einer optionalen Kratzschutzschicht ausgewählt ist.

18. Elektrisch steuerbare Vorrichtung mit variabler Diffusion durch Flüssigkristalle nach einem der Ansprüche 1 bis 17,
**dadurch gekennzeichnet, dass** das dielektrische Substrat (1) auf der Seite der Oberfläche Sb transparent ist und die erste Elektrode trägt, die transparent ist, und eine erste Glasscheibe aufweist, die auf der Seite der Oberfläche Sb über eine thermoplastische Verbundzwischenlagenschicht mit einer anderen Glasscheibe laminiert ist und/oder der dielektrische Träger (1') auf der Seite der Oberfläche Sc transparent ist und die zweite Elektrode trägt, die transparent ist, und eine Glasscheibe aufweist, die auf der Seite der Oberfläche Sc über eine thermoplastische Verbundzwischenlagenschicht mit einer anderen Glasplatte laminiert ist, die die gesamte oder einen Teil der Oberfläche der ersten Glasscheibe einnimmt, die optional getönt ist, insbesondere blau, grün, grau oder bronzefarben, gebogen und/oder vorgespannt.

19. Elektrisch steuerbare Vorrichtung mit variabler Diffusion durch Flüssigkristalle nach einem der vorstehenden Ansprüche,
**dadurch gekennzeichnet, dass** sie eine Verbundverglasung aufweist, die aufweist:
- eine erste zusätzliche Glasscheibe (8), optional getönt,
- eine thermoplastische Verbundzwischenschicht, insbesondere EVA oder PVB
- eine zweite zusätzliche Glasscheibe (8') oder eine Kunststoffscheibe, wobei die inneren Hauptflächen, genannt F2 und F3, der ersten und der zweiten zusätzlichen Glasscheibe einander zugewandt sind, wobei der Stapel zwischen den Flächen F2 und F3 und vorzugsweise in der Verbundzwischenschicht liegt, insbesondere mit dem Substrat, das polymer ist, sogar dem Träger, der polymer ist, der die gesamte oder einen Teil der Oberfläche der ersten Scheibe einnimmt.

20. Elektrisch steuerbare Vorrichtung mit variabler Diffusion durch Flüssigkristalle nach einem der vorstehenden Ansprüche
**dadurch gekennzeichnet, dass** sie eine Verglasung aufweist, die insbesondere laminiert und/oder gewölbt ist, und der Stapel ein insbesondere umlaufendes Band auf einem Abschnitt einer Hauptfläche der Verglasung ausbildet.

21. Elektrisch steuerbare Vorrichtung mit variabler Diffusion durch Flüssigkristalle nach einem der vorstehenden Ansprüche,
**dadurch gekennzeichnet, dass** sie eine laminierte und insbesondere gewölbte Verglasung aufweist, und der Stapel zwischen der ersten und der zweiten Verglasung beziehungsweise der äußeren und der inneren Verglasung liegt und ein umlaufendes Band auf einem oberen Abschnitt der Verbundverglasung ausbildet, wobei der sogenannte äußere Rand des Stapels von außen durch eine erste umlaufende Schicht abgedeckt ist, die auf der äußeren Verglasung undurchsichtig ist, und/oder der sogenannte innere Rand des Stapels von innen durch eine zweite umlaufende Schicht abgedeckt ist, die auf der inneren Verglasung undurchsichtig ist.

22. Elektrisch steuerbare Vorrichtung mit variabler Diffusion durch Flüssigkristalle nach einem der vorstehenden Ansprüche,
**dadurch gekennzeichnet, dass** die Verglasung laminiert ist und/oder gebogen ist und aus einer Verglasung eines Kraftfahrzeugs oder eines Eisenbahn- oder Seefahrzeugs ausgewählt ist, oder **dass** die Verglasung eine Glastür, eine Fassade oder ein Fenster, eine Trennwand, ein verglaster Teil von Stadtmobiliar oder Wohnmobiliar ist und/oder Teil einer Doppel- oder Dreifachverglasung ist oder **dass** sie als Projektions- oder Rückprojektionsschirm und/oder, insbesondere bei Verbundverglasungen, in Kombination mit einer anderen elektrisch steuerbaren Vorrichtung wie einer elektrisch steuerbaren elektrolumineszierenden Vorrichtung, im Besonderen LED, OLED, TFEL verwendet wird.

23. Verfahren zum Herstellen einer elektrisch steuerbaren Vorrichtung mit variabler Diffusion durch Flüssigkristalle nach einem der vorstehenden Ansprüche und das die folgenden Schritte aufweist:
- Bereitstellen einer ersten Elektrode insbesondere auf einem dielektrischen Substrat, Bereitstellen einer zweiten Elektrode insbesondere auf einem dielektrischen Träger
- Bereitstellen einer Mischung, die aufweist:
- mindestens einen Polymervorläufer
- Flüssigkristalle, die mindestens erste Flüssigkristalle, die eine Mesophase P vorweisen, und optional mindestens zweite Flüssigkristalle einschließen, wobei die Mischung die Mesophase P und eine Mesophase P' aufweist, wobei TA die Übergangstemperatur zwischen der Mesophase P und der Mesophase P' der Mischung ist
- falls nötig einen Polymerisationsinitiator, vorzugsweise einen Photoinitiator
- Ausbilden eines Stapels von Schichten, der zwischen der ersten und der zweiten Elektrode das Ausbilden aus der Mischung einer elektroaktiven Schicht aus einem Material aufweist, das die Flüssigkristalle aufweist, die durch ein Polymernetzwerk stabilisiert sind, wobei das Ausbilden aufweist:
- bei der Temperatur Ti, die niedriger als TA ist, in der Mesophase P', Polymerisieren vorzugsweise durch Photopolymerisation, vorzugsweise unter Ultraviolett oder UV, des oder der Vorläufer(s), was zu dem Polymernetzwerk führt
und **dass** es in der Mesophase P' das Ausbilden von Domänen umfasst, insbesondere subzentimetrisch, mit zweidimensionalen topologischen Defekten, die im Wesentlichen in der Mesophase P weiterbestehen.

24. Verfahren zum Herstellen einer elektrisch steuerbaren Vorrichtung mit variabler Diffusion durch Flüssigkristalle nach dem vorstehenden Anspruch, **dadurch gekennzeichnet, dass** die ersten Flüssigkristalle die Mesophase P und die Mesophase P' vorweisen, wobei die ersten Flüssigkristalle eine Übergangstemperatur Tp zwischen der Mesophase P und der Mesophase P' besitzen, wobei TA vorzugsweise niedriger als oder gleich Tp ist, das Polymerisieren bei der Temperatur Ti stattfindet, die niedriger als Tp oder TA ist.

25. Verfahren zum Herstellen der elektrisch steuerbaren Vorrichtung mit variabler Diffusion nach einem der vorstehenden Verfahrensansprüche, **dadurch gekennzeichnet, dass** die P-Mesophase weiter entfernt von der kristallinen Phase als die P'-Mesophase ist, im Besonderen die P-Mesophase nematisch und optional verdreht ist.

26. Verfahren zum Herstellen der elektrisch steuerbaren Vorrichtung mit variabler Diffusion nach einem der vorstehenden Verfahrensansprüche, **dadurch gekennzeichnet, dass** die Mesophase P' nicht nematisch und sogar smektisch ist.

27. Verfahren zum Herstellen der elektrisch steuerbaren Vorrichtung mit variabler Diffusion nach einem der vorstehenden Verfahrensansprüche, **dadurch gekennzeichnet, dass** das Ausbilden von Domänen insbesondere durch einen der folgenden Schritte erfolgt:
- durch Inkontaktbringen der Mischung mit der ersten und der zweiten Schicht zum Verankern der Flüssigkristalle an der Oberfläche
- durch Anlegen von Einschränkungen
- durch Anlegen eines elektrischen Feldes, im Besonderen eines niederfrequenten Wechselfelds, von höchstens 100 Hz, oder höchstens 10 Hz, wobei die Mischung geladene Teilchen aufweist.

28. Verfahren zum Herstellen der elektrisch steuerbaren Vorrichtung mit variabler Diffusion nach einem der vorstehenden Verfahrensansprüche, **dadurch gekennzeichnet, dass** das Ausbilden der elektroaktiven Schicht das Inkontaktbringen der Mischung mit der ersten und der zweiten Schichten zum Verankern der Flüssigkristalle an der Oberfläche umfasst, im Besonderen:
- Abscheiden auf flüssigem Weg einer Schicht oder Bereitstellen eines Elements, beispielsweise eines submillimetrischen Films, der mit der ersten Elektrode verbunden ist
- Abscheiden auf flüssigem Weg einer Schicht oder Bereitstellen eines Elements, beispielsweise eines submillimetrischen Films, der mit der zweiten Elektrode verbunden ist, oder Erzeugen eines Gaszwischenraums, beispielsweise eines Luftzwischenraums, zwischen der zweiten Elektrode und der Mischung.

29. Verfahren zum Herstellen der elektrisch steuerbaren Vorrichtung mit variabler Diffusion nach einem der vorstehenden Verfahrensansprüche, **dadurch gekennzeichnet, dass** die ersten Flüssigkristalle eine Mesophase P' besitzen, die smektisch ist, insbesondere A und eine nematische Mesophase P, und die zweiten Flüssigkristalle eine Mesophase besitzen, insbesondere nematisch, und die frei von smektischer Mesophase sind.

30. Verfahren zum Herstellen der elektrisch steuerbaren Vorrichtung mit variabler Diffusion nach einem der vorstehenden Verfahrensansprüche, **dadurch gekennzeichnet, dass** es einen Schritt des Laminierens des Stapels zwischen zwei Glasscheiben umfasst, insbesondere gebogen, mittels einer polymeren Verbundzwischenlagenschicht, insbesondere thermoplastischem Material, zum Beispiel PVB oder EVA, wobei die Verbundzwischenschicht eine oder mehrere Scheiben aufweist, insbesondere Laminierung bei einer Temperatur von höchstens 140 °C und sogar höchstens 120 °C.

## Claims

1. An electrically controllable device having scattering which can be varied by liquid crystals (100, 200, 300, 400, 500, 600, 700) comprising a stack of layers in this order:
- a first electrode (2), in particular on a dielectric substrate, first electrode with a first main surface referred to as bonding surface and a surface referred to as opposite surface Sb
- a dielectric electroactive layer (3) with a main face referred to as face on the bonding surface side and a main face referred to as opposite face A2, made of a material comprising:
- liquid crystals
- polymers forming a polymeric network, the liquid crystals being stabilized by the polymeric network
- a second electrode (2') with on the side of face A2 a main surface referred to as second bonding surface and with a surface referred to as opposite surface Sc, in particular second electrode on a dielectric support
the electroactive layer being visible by transparency on the side of the first electrode and/or on the side of the second electrode,
**characterized in that** the material exhibits, starting from a temperature referred to as T1, a mesophase referred to as P in which the material comprises an assembly of domains, in particular subcentimetric domains, which comprise two-dimensional topological defects,
and **in that**, at a temperature T' greater than or equal to T1, the stack exhibits at least three scattering states for at least one wavelength in the visible region,
the first state being the most scattering,
the second state being scattering and less scattering than the first state
and the third state being transparent or scattering and less scattering than the second state,
the three states being switchable,
at least two of the three states being obtained by the application of an electric field between the first and second electrodes,
the material exhibits another mesophase P' at a temperature of less than T1; the mesophase P is more distant from the crystalline phase than the mesophase P', said domains of the mesophase P are domains remaining from said another mesophase P'.

2. The electrically controllable device having scattering which can be varied by liquid crystals as claimed in one of the preceding claims, **characterized in that** the first state is accessible in the absence of said applied electric field, the second and third states are accessible in the presence of said applied electric field, the second state being obtained for a voltage V1 and the third state being obtained for a voltage V2 which is greater than V1.

3. The electrically controllable device having scattering which can be varied by liquid crystals as claimed in either of the preceding claims, **characterized in that**, under said electric field and at T', the stack exhibits a diffuse transmission and/or a haze which varies with the voltage in all or part between 5 and 120V.

4. The electrically controllable device having scattering which can be varied by liquid crystals as claimed in one of the preceding claims, **characterized in that** the stack exhibits a total transmission TT measuring with an integrating sphere without electrical field of at least 5% at 550 nm and even from 400 to 600 nm, with a difference between the maximum total transmission and the minimum total transmission TTmax - TTmin of at most 5% from 400 to 600 nm and **in that** the total transmission TT' under said electric field, in particular for an electric voltage between 5 and 120V, is such that TT'-TT (in absolute value) is less than 2% at 550 nm and even from 400 to 600 nm and even a difference between the maximum total transmission under field TT'max and the minimum total transmission TT'min of at most 5% from 400 to 600 nm.

5. The electrically controllable device having scattering which can be varied by liquid crystals as claimed in one of the preceding claims, **characterized in that** the mesophase P is not smectic, in particular is nematic.

6. The electrically controllable device having scattering which can be varied by liquid crystals as claimed in one of the preceding claims, **characterized in that** the mesophase P exhibits a lower positional order thansaid mesophase P' of the material; P' in particular is not nematic; the liquid crystals are especially on average parallel to one another, that is to say with at least a long-range spontaneous orientational order.

7. The electrically controllable device having scattering which can be varied by liquid crystals as claimed in one of the preceding claims, **characterized in that** the mesophase P is nematic, optionally twisted nematic.

8. The electrically controllable device having scattering which can be varied by liquid crystals as claimed in one of the preceding claims, **characterized in that** the defects are rendered immobile by the polymeric network.

9. The electrically controllable device having scattering which can be varied by liquid crystals as claimed in one of the preceding claims, **characterized in that** the phase P' is not nematic; in particular, the phase P' is smectic and said defects of the mesophase P' are smectic defects.

10. The electrically controllable device having scattering which can be varied by liquid crystals as claimed in one of the preceding claims, **characterized in that** the phase P is nematic.

11. The electrically controllable device having scattering which can be varied by liquid crystals as claimed in one of the preceding claims, **characterized in that**, at said temperature T', without said electric field and/or under said electric field, the domains are **characterized by** polarized light optical microscopy, referred to as PLM, on the image of said PLM, each domain being defined by a surface referred to as apparent surface SD; the density of domains is at least 100 domains/mm² or even at least 1000 domains/mm², determined by the number of apparent surfaces SD.

12. The electrically controllable device having scattering which can be varied by liquid crystals as claimed in one of the preceding claims, **characterized in that** the mesophase P substantially exhibits a structure, in particular imposed by the polymeric network, of the layers of liquid crystals, especially domains exhibiting zones of curved layers of liquid crystals and optionally zones of flat layers of liquid crystals.

13. The electrically controllable device having scattering which can be varied by liquid crystals as claimed in one of the preceding claims, **characterized in that** the domains are comparable to focal conic domains of the smectic phases, especially toric, non-toric, parabolic, hemicylindrical or fan-shaped focal conic domains.

14. The electrically controllable device having scattering which can be varied by liquid crystals as claimed in one of the preceding claims, **characterized in that** the defects are line defects chosen from a regular or irregular closed contour, such as a circle, an ellipse, a square or rectangle or a linear, elliptical, parabolic or hyperbolic geometry and especially the layer comprises a first type of defects and a second type of defects.

15. The electrically controllable device having scattering which can be varied by liquid crystals as claimed in one of the preceding claims, **characterized in that** it comprises:
- in contact with the face A1, a first surface anchoring layer for the liquid crystals, capable of anchoring at least a fraction of the liquid crystals in contact with this first anchoring layer according to a first, preferably planar, orientation in the absence of said applied electric field, first anchoring layer which is preferably transparent and optionally tinted, in particular with an at most micrometric and even submicrometric thickness E₁
- in contact with the face A2, a second surface anchoring layer, in particular normal or degenerate planar, capable of orientating a fraction of the liquid crystals in contact with this second anchoring layer according to a second orientation in particular similar to or distinct from the first orientation in the absence of said applied electric field, second anchoring layer which is preferably transparent and optionally tinted, with an at most micrometric and even submicrometric thickness E'₁.

16. The electrically controllable device having scattering which can be varied by liquid crystals as claimed in the preceding claim, **characterized in that** the first anchoring layer is a unidirectional or degenerate planar anchoring and the second anchoring layer is a normal or degenerate planar anchoring or the first anchoring layer is a dielectric layer, in particular polymeric layer, and/or the second anchoring layer is a dielectric layer, in particular polymeric layer, or an air/gas-filled cavity.

17. The electrically controllable device having scattering which can be varied by liquid crystals as claimed in one of claims 1 to 16, **characterized in that** the dielectric substrate (1) is transparent, surface side Sb, and carries the first electrode, which is transparent and chosen from a transparent glass sheet or a transparent polymeric sheet with an optional hard coat, and/or the dielectric support (1') is transparent, surface side Sc, and carries the second electrode, which is transparent and chosen from a transparent glass sheet or a transparent polymeric sheet with an optional hard coat.

18. The electrically controllable device having scattering which can be varied by liquid crystals as claimed in one of claims 1 to 17, **characterized in that** the dielectric substrate (1) is transparent, surface side Sb, and carries the first electrode, which is transparent and comprises a first glass sheet which is, surface side Sb, laminated via a thermoplastic lamination interlayer to another glass sheet, and/or the dielectric support (1') is transparent, surface side Sc, and carries the second electrode, which is transparent and comprises a glass sheet which is, surface side Sc, laminated via a thermoplastic lamination interlayer to another glass sheet, occupying all or part of the surface of the first glass sheet, which is optionally tinted, in particular blue, green, gray or bronze, and bent and/or tempered.

19. The electrically controllable device having scattering which can be varied by liquid crystals as claimed in one of the preceding claims, **characterized in that** it comprises a laminated glazing comprising:
- a first additional glass sheet (8), which is optionally tinted
- a thermoplastic lamination interlayer, in particular EVA or PVB
- a second additional glass sheet (8') or a plastic sheet
the main internal faces, referred to as F2 and F3, of the first and second additional glass sheets facing one another, the stack being between the faces F2 and F3 and preferably in the lamination interlayer, in particular with the substrate, which is polymeric, and even the support, which is polymeric, occupying all or part of the surface of the first sheet.

20. The electrically controllable device having scattering which can be varied by liquid crystals as claimed in one of the preceding claims, **characterized in that** it comprises a glazing, in particular a laminated and/or bent glazing, and the stack forms a strip, in particular a peripheral strip, over a portion of a main face of said glazing.

21. The electrically controllable device having scattering which can be varied by liquid crystals as claimed in one of the preceding claims, **characterized in that** it comprises a laminated and in particular bent glazing, and the stack is between the first and second glazings, respectively "exterior" and "interior" glazings, and forms a peripheral strip over an upper portion of the laminated glazing, the "external" edge face of the stack being masked from the outside by a first opaque peripheral layer on the exterior glazing, and/or the "internal" edge face of the stack being masked from the inside by a second opaque peripheral layer on the interior glazing.

22. The electrically controllable device having scattering which can be varied by liquid crystals as claimed in one of the preceding claims, **characterized in that** the glazing is laminated and/or is bent and is chosen from a glazing of an automobile or rail or nautical vehicle or **in that** the glazing is a glazed door, a shop window or display case, a partition, a glazed portion of street or household furniture and/or forms part of a double or triple glazing or **in that** it is used as projection or back projection screen and/or, in particular in a laminated glazing, in combination with another electrically controllable device, such as an electrically controllable electroluminescent device, in particular LED, OLED, TFEL.

23. A process for the manufacture of an electrically controllable device having scattering which can be varied by liquid crystals, as claimed in one of the preceding claims, and comprising the following stages:
- provision of a first electrode, in particular on a dielectric substrate
- provision of a second electrode, in particular on a dielectric support
- the provision of a mixture comprising:
- at least one polymer precursor
- liquid crystals including at least first liquid crystals exhibiting a mesophase P and optionally at least second liquid crystals
the mixture exhibiting the mesophase P and a mesophase P', TA being the temperature for transition between the mesophase P and the mesophase P' of the mixture
- if necessary, a polymerization initiator, preferably a photoinitiator
- the formation of a stack of layers comprising, between the first and second electrodes, the formation, starting from said mixture, of an electroactive layer made of a material comprising said liquid crystals which are stabilized by a polymeric network, said formation comprising:
- at the temperature Ti which is less than TA, in mesophase P', the polymerization, preferably by photopolymerization, preferably under ultraviolet or UV radiation, of said precursor or precursors, resulting in said polymeric network
and in that it includes, in mesophase P', the formation of domains, notably subcentimetriques, with two-dimensional topological defects, remaining substantially in mesophase P.

24. The process for the manufacture of an electrically controllable device having scattering which can be varied by liquid crystals as claimed in the preceding claim, **characterized in that** the first liquid crystals exhibiting the mesophase P and the mesophase P', the first liquid crystals having a temperature for transition Tp between the mesophase P and the mesophase P', TA being preferably is less than or equal to Tp, the polymerization is at the temperature Ti which is less than Tp or TA.

25. The process for the manufacture of the electrically controllable device having scattering which can be varied as claimed in either of the preceding process claims, **characterized in that** the mesophase P is more distant from the crystalline phase than the mesophase P'; in particular, the mesophase P is optionally nematic notably twisted nematic.

26. The process for the manufacture of the electrically controllable device having scattering which can be varied as claimed in one of the preceding process claims, **characterized in that** the mesophase P' is not nematic and even smectic.

27. The process for the manufacture of the electrically controllable device having scattering which can be varied one of the preceding process claims, **characterized in that** the formation of domains is carried out in particular by one of the following stages:
- by bringing said mixture into contact with first and second layers for anchoring the liquid crystals at the surface
- by application of stresses
- by application of an electric field, especially a low-frequency alternating electric field, of at most 100 Hz, or of at most 10 Hz, the mixture comprising charged particles.

28. The process for the manufacture of the electrically controllable device having scattering which can be varied as claimed in one of the preceding process claims, **characterized in that** said formation of the electroactive layer comprises bringing said mixture into contact with first and second layers for anchoring the liquid crystals at the surface, especially:
- deposition by the liquid route of a layer, or provision of an element, such as a submillimetric film bonded to the first electrode
- deposition by the liquid route of a layer, or provision of an element, such as a submillimetric film bonded to the second electrode or creation of a gas-filled cavity, such as an air-filled cavity, between the second electrode and the mixture.

29. The process for the manufacture of the electrically controllable device having scattering which can be varied as claimed in one of the preceding process claims, **characterized in that** the first liquid crystals have a mesophase P' which is smectic, in particular smectic A, and a nematic mesophase P and the second liquid crystals have a mesophase, in particular nematic mesophase, and are devoid of smectic mesophase.

30. The process for the manufacture of the electrically controllable device having scattering which can be varied as claimed in one of the preceding process claims, **characterized in that** it comprises a stage of lamination of said stack between two glass sheets, in particular bent glass sheets, by means of a polymeric lamination interlayer, in particular a thermoplastic interlayer, for example PVB or EVA, lamination interlayer comprising one or more sheets, in particular lamination at a temperature of at most 140°C and even of at most 120°C.
